(19) Europäisches Patentamt
European Patent Office
Office européen des brevets

(11) **EP 4 764 976 A1**

(12) **EUROPEAN PATENT APPLICATION**

(43) Date of publication:
**24.06.2026 Bulletin 2026/26**

(21) Application number: **24307289.9**

(22) Date of filing: **23.12.2024**

(51) International Patent Classification (IPC):
**G06N 10/40** $^{(2022.01)}$ **G06N 10/70** $^{(2022.01)}$

(52) Cooperative Patent Classification (CPC):
**G06N 10/40; G06N 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Alice & Bob**
**75015 Paris (FR)**

(72) Inventor: **ESSIG, Antoine**
**75015 Paris (FR)**

(74) Representative: **Atout PI Laplace**
**Immeuble Up On**
**25 Boulevard Romain Rolland**
**CS 40072**
**75685 Paris Cedex 14 (FR)**

(54) **METHOD AND SYSTEM FOR RE-SETTING A CAT QUBIT**

(57) There is provided a method for resetting an arbitrary state, hosted in a quantum system, to the vacuum Fock state or a coherent state, wherein the quantum system comprises: (I) at least one resonant portion configured to have a first mode having a first resonant frequency and wherein the arbitrary state is hosted in the first mode, (II) a non-linear element coupled to the at least one resonant portion so as to non-linearly couple to the first mode, and (III) one or more signal generator(s) coupled to the at least one resonant portion and/or to the non-linear element and configured to input control signals to physically stabilize a cat qubit subspace in the first mode having a cat phase angle. The method comprises: (i) physically stabilizing for a first period of time, with the one or more signal generator(s), a first cat qubit subspace having a first cat phase angle and first cat size $|\alpha|^2$, wherein $\alpha$ is a first amplitude which is the amplitude of the superposed coherent states $|\pm\alpha\rangle$ defining the first cat qubit subspace (702); (ii) after the first period of time, physically performing for a second period of time, with the one or more signal generator(s), a first parallel displacement drive by inputting electromagnetic radiation having a first phase substantially equal with the first cat phase angle, a frequency substantially equal to the first resonant frequency, and a first displacement amplitude greater than or equal to the first amplitude (704); (iii) after the second period of time, physically stabilizing for a third period of time, with the one or more signal generator(s), a second cat qubit subspace having a second cat phase angle which is substantially equal to the first cat phase angle and second cat size $|\beta|^2$, wherein $\beta$ is a second amplitude which is the amplitude of the superposed coherent states $|\pm\beta\rangle$ defining the first cat qubit subspace, such that a coherent state $|\beta\rangle$ with the second amplitude $\beta$ is stabilized in the first mode (706). There is also provided a corresponding quantum processor, a computer program product, and a computer-readable medium.

Stabilize 1st cat qubit subspace having 1st cat phase angle and first cat size $|\alpha|^2$
**702**

↓

Perform 1st parallel displacement drive having phase equal to 1st cat phase angle & displacement amplitude $\geq \alpha$
**704**

↓

Stabilize 2nd cat qubit subspace having 2nd cat phase angle equal to 1st cat, and 2nd cat size $|\beta|^2$ to stabilize coherent state $|\beta\rangle$
**706**

**Fig. 6**

EP 4 764 976 A1

**Description**

FIELD OF THE INVENTION

The invention concerns a method of re-setting a cat-qubit stabilized in a quantum system, as well as a quantum system for doing same.

BACKGROUND

Quantum computing enables solving certain mathematical calculations which are intractable using classical computers, by encoding information with so-called qubits. Of the many varieties of qubits, stabilized cat qubits (which can be hosted in a physical resonator such as a superconducting resonators) benefit from a noise bias, where bit-flip errors are exponentially suppressed with the average number of bosons (normally photons) in the so-called Schrödinger cat states hosted in a resonator, conventionally termed the "storage" or "memory" resonator. This suppression is effective for a wide range of physical noise processes, including photon loss, thermal excitations, photon dephasing, and nonlinearities from Josephson junctions.

One challenge in operating cat-qubits is to reset the memory resonator to the "vacuum" ground state, denoted by the absence of photons populating the memory resonator, in a swift manner and with high fidelity (also known as the vacuum Fock state).

This is important because many quantum algorithms start from a given state in the cat-qubit manifold confined in the memory resonator, which is typically first prepared by evolving the population of the memory resonator from the vacuum ground state thereof. For instance, by implementing a two-boson drive to populate the memory resonator by pairs of bosons only and further under two-boson loss therefrom, the vacuum ground state may be evolved into a stabilized "+" cat state $|C_\alpha^+\rangle$ which is the even superposition of two coherent states $|\alpha\rangle$ and $|-\alpha\rangle$, wherein $|\alpha|^2$ denotes the average number of photons stored in the memory resonator.

The state $|C_\alpha^+\rangle$ prepared from the reset vacuum Fock state may then be used in an algorithm. For instance, it could act as the ancilla cat qubit which is subject to CNOT gates as the control with adjacent data (target) cat qubits, for subsequent error syndrome (parity) measurement in a repetition error correcting code. After the parity measurement, the ancilla cat qubit needs to be prepared as the $|C_\alpha^+\rangle$ to begin the next syndrome extraction round.

Lescanne, Raphaël, et al. "Exponential suppression of bit-flips in a qubit encoded in an oscillator." Nature Physics 16.5 (2020): 509-513, as well as Berdou, Camille, et al. "One hundred second bit-flip time in a two-photon dissipative oscillator." PRX Quantum 4.2 (2023): 020350 both disclose resetting the resonator in which the cat-qubit is hosted to the vacuum Fock state by turning off the cat-qubit stabilization mechanism and subsequently waiting enough time for the cat qubit to naturally decay to the vacuum ground state by single photon loss. However, with ever-improving memory resonator quality factors (which decreases the single photon loss rate of the memory resonator to thereby increase coherence times of the cat qubit), this method drastically increases the duration of the reset protocol.

Réglade, U., Bocquet, A., Gautier, R., Cohen, J., Marquet, A., Albertinale, E., Pankratova, N., Hallén, M., Rautschke, F., Sellem, L.A. and Rouchon, P., 2024. Quantum control of a cat qubit with bit-flip times exceeding ten seconds. Nature, pp.1-6, discloses an active memory reset via pumping an asymmetrically threaded squid (ATS) at a reset (rs) frequency $2\omega_p^{(rs)} = |\omega_b - \omega_a|$, where $\omega_b$ is the frequency of the "buffer" resonator comprising the ATS and $\omega_a$ is the frequency of the memory resonator coupled thereto. However, this process implies using two photons of the pump ($2\omega_p^{(rs)}$) in the wave mixing process, and is thus less likely to happen given the lower probability involved in two photons of the pump interacting. As such, to use this active reset, one needs to use larger pump powers compared to that in other process such as the two photon exchange, which causes other problems and degrades the quality of the qubits. Moreover, this active memory reset requires additional hardware resources in the form of additional microwave equipment and control electronics to generate and control the reset pump, as well as further calibrations for the additional reset pump $\omega_p^{(rs)}$, and can only actively reset to the vacuum ground state.

Furthermore, in some scenarios, it would also be desirable to reset, in a single protocol, the cat-qubit to either of the two coherent states $|\pm\alpha\rangle$ (which approximate the computational basis states of a cat qubit, given by the cardinal points of the Z-axis of the Bloch sphere representation of the cat qubit) without first resorting to depopulating the memory to the vacuum Fock state, which is entirely absent from the prior art.

This invention aims to address one or more of the aforementioned problems to provide an improved method and system for resetting a memory resonator for hosting a cat qubit to the vacuum Fock states or directly to the coherent states $|\pm\alpha\rangle$.

SUMMARY

In a first aspect, there is provided a method for resetting an arbitrary state, hosted in a quantum system, to the vacuum Fock state or a coherent state, wherein the quantum system comprises: (I) at least one resonant portion configured to have a first mode having a first resonant frequency and wherein the arbitrary state is hosted in the first mode, (II) a non-linear element coupled to the at least one resonant portion so as to non-linearly couple to the first mode, and (III) one or more signal generator(s) coupled to the at least one resonant portion and/or to the non-linear element and configured to input control signals to physically stabilize a cat qubit subspace in the first mode having a cat phase angle.

The method comprises: (i) physically stabilizing for a first period of time, with the one or more signal generator(s), a first cat qubit subspace having a first cat phase angle and first cat size $|\alpha|^2$, wherein $\alpha$ is a first amplitude which is the amplitude of the superposed coherent states $|\pm\alpha\rangle$ defining the first cat qubit subspace; (ii) after the first period of time, physically performing for a second period of time, with the one or more signal generator(s), a first parallel displacement drive by inputting electromagnetic radiation having a first phase substantially equal with the first cat phase angle, a frequency substantially equal to the first resonant frequency, and a first displacement amplitude greater than or equal to the first amplitude; (iii) after the second period of time, physically stabilizing for a third period of time, with the one or more signal generator(s), a second cat qubit subspace having a second cat phase angle which is substantially equal to the first cat phase angle and second cat size $|\beta|^2$, wherein $\beta$ is a second amplitude which is the amplitude of the superposed coherent states $|\pm\beta\rangle$ defining the first cat qubit subspace, such that a coherent state $|\beta\rangle$ with the second amplitude $\beta$ is stabilized in the first mode.

Thus, the present method is a particularly quick active reset of an arbitrary state by making use of the inherent cat stabilization subspace. The present method works with the minimal hardware required to control a dissipative cat, and the present Inventor(s) has/have discovered that the speed of the reset scales with the quality of the cat qubit stabilized. For instance, for a dissipative cat qubit with a two-photon dissipation rate $\kappa_2$, the larger the value of $\kappa_2$, the quicker the present method for resetting the an arbitrary state hosted in the quantum system.

In operation (ii) the first parallel displacement drive may have a first displacement amplitude greater than or equal to twice the first amplitude

The method may further comprise: (iv) after the third period of time, physically performing, with the one or more signal generator(s), a second parallel displacement drive by inputting electromagnetic radiation having a second phase substantially $\pi$ out-of-phase with the second cat phase angle and a frequency substantially equal to the first resonant frequency, wherein the second parallel displacement drive is performed for a fourth period of time to substantially evacuate the population hosted in the first mode to the vacuum Fock state.

The quantum system may be configured to physically stabilize a cat qubit subspace by dissipative stabilization.

The quantum system may be configured to physically stabilize a cat qubit subspace by parametric dissipative stabilization or resonant dissipative stabilization.

The quantum system may be configured to physically stabilize a cat qubit subspace by Kerr Hamiltonian stabilization.

Prior to operation (ii), the stabilization of the first cat qubit subspace may be terminated, such that no cat qubit subspace is physically stabilized during the first parallel displacement drive of operation (ii).

Alternatively, during operation (ii), the stabilization of the first cat qubit subspace is continuously maintained, such that the first cat qubit subspace is physically stabilized during the first parallel displacement drive of operation (ii).

The second cat qubit subspace stabilized in operation (iii) may have a second cat size $|\beta|^2$ which is larger than the first cat size $|\alpha|^2$ of the first cat qubit subspace stabilized in operation (i).

The second cat qubit subspace stabilized in operation (iii) may have a second cat size $|\beta|^2$ which is substantially equal to the first cat size $|\alpha|^2$ of the first cat qubit.

Operation (iii) may comprise physically stabilizing for sequential discrete periods of time during the third period of time, a series of discrete stepped stabilizations respectively resulting in stabilizing a plurality of cat qubit subspaces, wherein successive ones of said plurality of cat qubit subspaces may have decreasing cat sizes.

Operation (iii) may comprise physically stabilizing during the third period of time, the second cat qubit subspace with a continuously decreasing cat size.

In a second aspect, there is provided a quantum processor comprising: a quantum system which comprises (I) at least one resonant portion configured to have a first mode having a first resonant frequency and wherein an arbitrary state is hosted in the first mode, (II) a non-linear element coupled to the at least one resonant portion so as to non-linearly couple to the first mode, and (III) one or more signal generator(s) coupled to the at least one resonant portion and/or to the non-linear element and configured to input control signals. The quantum processor also comprises a command circuit configured to control the one or more signal generator(s) so as to physically stabilize a cat qubit subspace in the first mode having a cat phase angle; wherein the command circuit is configured to perform method according to the first aspect or any of its embodiments.

In a third aspect, there is also provided a computer program product comprising instructions to cause the quantum processor of the second aspect to perform the method according to the first aspect or any of its embodiments.

In a fourth aspect, there is also provided a computer-readable medium having stored thereon the computer program product of the third aspect.

BRIEF DESCRIPTION OF THE DRAWINGS

Various embodiments of the invention will now be described, by way of example only, and with reference to the accompanying drawings in which:

Figure 1 shows a diagram of a generic quantum system for hosting one or more cat qubits according to an embodiment of the invention;

Figure 2 shows components of a quantum system for stabilizing a cat qubit by implementing a parametric dissipative stabilization with an ATS, according to an embodiment of the invention;

Figure 3 shows components of a quantum system for stabilizing a cat qubit by implementing a dissipative stabilization with a DC-biased non-linear element, according to an embodiment of the invention;

Figure 4 shows components of a quantum system for stabilizing a cat qubit arranged to perform a resonant dissipative stabilization of a cat qubit, according to an embodiment of the invention;

Figure 5 shows an exemplary three-wave mixing nonlinear element which may be used in the embodiment of Figure 4;

Figure 6 shows a method for resetting an arbitrary state hosted in a quantum system for stabilizing a cat qubit such as those of Figures 1-5, according to the invention;

Figure 7 shows an example Wigner tomograph of a cat qubit;

Figure 8 shows a schematic pulse sequence, according to an embodiment of the invention;

Figure 9 shows a schematic pulse sequence, according to an embodiment of the invention;

Figure 10 shows a conceptual schematic of non-adiabatic processes, according to the embodiment of Figure 9;

Figure 11 shows a schematic pulse sequence, according to an embodiment of the invention;

Figure 12 shows a schematic pulse sequence, according to an embodiment of the invention;

Figure 13 illustrates simulated Wigner functions corresponding to the embodiment of Figure 8;

Figure 14 illustrates the simulated population of the $|+\alpha\rangle$ state during the embodiment of Figure 8;

Figure 15 illustrates simulated Wigner functions corresponding to the embodiment of Figure 8;

Figure 16 shows simulated populations in the $|+\alpha\rangle$ state for different values of displaced cat size, according to an embodiment of the invention;

Figure 17 illustrates simulated Wigner functions corresponding to the embodiment of Figure 9;

Figure 18 illustrates the simulated population of the $|+\alpha\rangle$ state during the embodiment of Figure 9;

Figure 19 illustrates the simulated population of the $|+3\alpha\rangle$ state during the embodiment of Figure 11;

Figure 20 illustrates the simulated Wigner functions corresponding to the embodiment of Figure 12;

Figures 21A and 21B shows simulations of the population of the $|\alpha\rangle$ coherent state in the memory during the embodiment of Figure 12 for different first parallel displacement drive strengths, according to an embodiment of the invention;

Figure 22 shows the fit of the final population in $|\alpha\rangle$ as a function of applying drive strength according to the embodiment of Figure 12;

Figure 23 shows a simulation for finding an optimal drive strength, according to an embodiment;

Figure 24 shows experiment results of the method according to the embodiment of Figure 12; and

Figure 25 shows experimental optimization of the counter displacement at the end of the protocol described in Figure 12.

DETAILED DESCRIPTION

**Quantum system for hosting a cat-qubit**

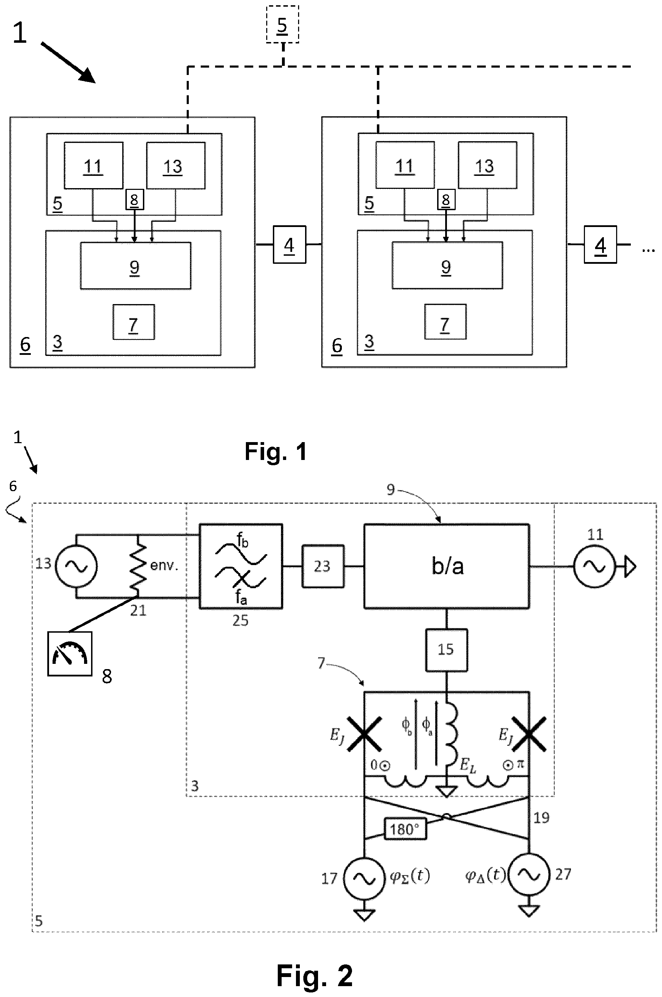

Figure 1 shows an exemplary quantum system 1 which is arranged to stabilize or host at least one so-called cat qubits, described in more detail below. The quantum system 1 comprises one or more qubit-hosting structures 6, each of which is configured to host or stabilize a qubit therein and at least one of which is configured to stabilize or host a cat qubit (and which is thus termed a cat-qubit-hosting structure 6). Figure 1 shows two qubit-hosting structures 6 as an example, which are coupled to each other via a linear or non-linear coupler 4. As will be appreciated, there could instead be a single cat-qubit-hosting structure 6 or there could be more than two.

Coupled to the at least one resonant portion 9 there may be a non-linear element 7, which for instance couples to the physical oscillatory mode. The at least one resonant portion 9 and the non-linear element 7 coupled thereto together thus provide a non-linear quantum circuit 3.

Each qubit-hosting structure 6 also has one or more signal generator(s) 11,13 coupled to the at least one resonant portion 9. In Figure 1, two signal generators are shown both coupled to the at least one resonant portion 9, however there could be only a single signal generator, or more than two. Additionally or alternatively, one or more signal generator(s) could be coupled to the non-linear element 7. Regardless of which part of the non-linear circuit 3 they are coupled to, the one or more signal generator(s) 11, 13 are configured to physically prepare a particular state in the qubit-hosting structure 6.

Moreover, as will be appreciated, the specific form of the control signals will depend on the specific architecture of quantum system 1. For instance, as discussed more below, if the quantum system 1 is based on superconducting circuits, the control signals may be electromagnetic pulses and drives (in particular microwave radiation), or current biases, or DC voltage biases etc.

Figure 1 also shows a detector 8 coupled to the at least one resonator portion 9 in each of the qubit-hosting structures. The detector 8 could instead be coupled to the non-linear element 7. What is important, is that the detector 8 is configured to measure signals output from the at least one oscillatory mode hosted by the at least one resonant portion 9 to provide measurement signals from the quantum system 1. It will be appreciated that it is not necessarily required to have a detector 8 for each qubit-hosting-structure 6, for instance for quantum annealers. However, for many applications it is convenient to provide a detector 8 associated with each qubit-hosting-structure 6. The detector 8 may be of any suitable type, for instance the detector could have a discrete-valued output (e.g. a binary output zero or 1), or the detector 8 could have a continuous -valued output.

Figure 1 further shows that each qubit-hosting structure 6 comprises a command circuit 5, which includes a classical processor (i.e. conventional computer) configured to control the signal generator(s) 11,13 and receive the output from the detector 8. Of course, a single command circuit 5 may globally control all of the elements of the various structures of quantum system 1, such as all of the qubit-hosting structures 6 and the non-linear couplers 4 where appropriate, as indicated via the dashed lines in Figure 1.

The command circuit 5 is therefore not "quantum", but rather controls the elements such as the signal generator(s) and the detector which themselves may be coupled to or have some influence on the qubit states hosted in the one or more qubit-hosting structures 6. In this sense then, the command circuit 5 and the quantum system 1 may together be considered quantum characterization unit. The quantum characterization unit may itself be part of a quantum processor, a quantum communication system, or a quantum detection system, as the case may be according to the specific technical use the qubits are put to.

A two-legged cat qubit is defined as a two-dimensional manifold spanned by the so-called cat states $|C_\alpha^\pm\rangle$ which are superpositions of two coherent states $|\alpha\rangle$ and $|-\alpha\rangle$: $\quad |C_\alpha^\pm\rangle = N^\pm(|\alpha\rangle \pm |-\alpha\rangle)$, where

$$N^\pm = 1/\sqrt{2(1 \pm e^{-2|\alpha|^2})} \, .$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flips is only at the cost of linear increase of phase-flips.

The cat qubits can be stabilized or confined by the following exemplary schemes:

(A) A parametric dissipative stabilization, with jump operator $L_2 = \sqrt{\kappa_2}(a^2 - \alpha^2)$, where $\kappa_2$ is the two-photon dissipation rate, $a$ is the photon annihilation operator of the memory mode a and $\alpha$ is a complex number defining the cat qubit. This jump operator can be realized by coupling a lossy buffer mode b with dissipation rate $\kappa_b$, and a four-wave mixing non-linear element - typically a Josephson junction or an asymmetrically threaded SQUID (ATS) - to the memory mode a and by engineering the Hamiltonian $H/\hbar = g_2(a^2 - \alpha^2)b^\dagger + \text{h.c.}$, where $b$ is the photon annihilation operator of the buffer mode band $g_2$ is the two-photon coupling rate, by applying to the four-wave mixing non-linear element a pump at frequency $|2f_a - f_b|$ and a drive of the buffer mode b at frequency $f_b$ provided $g_2 < \kappa_b$.

(B) A Kerr Hamiltonian $H/\hbar = \frac{K}{2}\left(a^{\dagger 2} - \alpha^2\right)\left(a^2 - \overline{\alpha^2}\right)$, where $K$ is the amplitude of the Kerr Hamiltonian, $\alpha$ is the photon annihilation operator, and $|\alpha|^2$ is the mean photon number.

(C) A detuned Kerr Hamiltonian $H/\hbar = \frac{K}{2}\left(a^{\dagger 2} - \alpha^2\right)\left(a^2 - \overline{\alpha^2}\right) - \Delta a^\dagger a$, where $K$ is the amplitude of the Kerr Hamiltonian, $a$ is the photon annihilation operator, $\alpha$ is a complex number defining the cat qubit, and $\Delta$ is the detuning factor.

(D) A two-photon exchange (TPE) Hamiltonian $H/_\hbar = g_2(a^2 - \alpha^2)\sigma_+ + \text{h.c.}$ , where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization (A).

(E) A dissipative squeezing stabilization, with jump operator $L_{SC}$ =

$$\sqrt{\kappa_{SC}}\left(\left(\cosh(r)a + \sinh(r)e^{i\theta}a^\dagger\right)^2 - \alpha^2\right),$$ where $\kappa_{SC}$ is the squeezed two-photon dissipation rate, $\alpha$ is

the photon annihilation operator of the memory mode a, $\alpha$ is a complex number defining the cat qubit, r and $\theta$ are the modulus and argument of the complex squeezing parameter $\xi = re^{i\theta}$. This jump operator can be realized by coupling a lossy buffer mode b with dissipation rate $\kappa_b$, and a four-wave mixing non-linear element - typically a Josephson junction or an ATS -, to the memory mode a and by engineering the Hamiltonian

$$H/_\hbar = g_{SC}\left(\left(\cosh(r)a + \sinh(r)e^{i\theta}a^\dagger\right)^2 - \alpha^2\right)b^\dagger + \text{h.c.}$$ , where $b$ is the photon annihilation operator of the buffer mode b and $g_{SC}$ is the squeezed two-photon coupling rate, with several pumps at frequencies $|2f_a - f_b|$, $f_b$ and $2f_a + f_b$, and a drive of the buffer mode b at frequency $f_b$ provided $g_{SC} < \kappa_b$.

(F) A variant of the previous stabilization scheme e), for which the Applicant filed the European patent application EP 23175147.0, in which a bosonic qubit - called *"moon cat qubit"* since the two blobs of the Wigner function have a crescent moon shape - is stabilized by engineering the Hamiltonian $H/_\hbar = g_2\left(a^2 + \lambda a^\dagger a - \alpha^2\right)b^\dagger + \text{h.c.}$ ,

where $g_2$ is the amplitude of the two-photon coupling rate as described above achieved via a pump **at frequency** $|2f_a - f_b|$, $a$ is the annihilation operator of the memory mode a, $\lambda$ is a complex number which phase and amplitude result from the amplitude of longitudinal coupling produced by a pump at frequency $f_b$, $\alpha$ is a complex number resulting from a drive of the buffer mode b at frequency $f_b$ and $b$ is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda = 2\tanh(r)$.

(G) A DC dissipative stabilization, for which the Applicant filed the European patent application EP 23306839.4, in which a cat qubit is stabilized in the spirit of the previous stabilization scheme a), except that the two-photon pump that engineers the non-linear conversion between two photons of the memory mode a and one photon of the buffer mode b is replaced with a DC voltage source which biases a non-linear element formed exclusively of one or more Josephson junctions, such that the DC-biased non-linear element acts as a voltage-to-frequency converter which, at the appropriate voltage bias, provides the required parametric interaction at the frequency $|2f_a - f_b|$ necessary to achieve dissipative stabilization. In particular, the two-photon coupling rate $g_2$ is therefore not limited by the amplitude of the two-photon pump: $g_2 = \dfrac{E_J}{4}\varphi_a^2\varphi_b$ , where $E_J$ is the Josephson energy of the one or more Josephson junctions, $\varphi_a$ is

the zero-point fluctuation of the phase of the memory mode a, and $\varphi_b$ is the zero-point fluctuation of the phase of the buffer mode b.

(H) A resonant dissipative stabilization, for which the Applicant filed the European patent application EP 21306965.1, with jump operator $L_2 = \sqrt{\kappa_2}(a^2 - \alpha^2)$ , where $\kappa_2$ is the two-photon dissipation rate, $a$ is the photon annihilation operator of the memory mode a and $\alpha$ is a complex number defining the cat qubit. This jump operator can be realized by coupling a lossy buffer mode b with dissipation rate $\kappa_b$, and a three-wave mixing non-linear element to the memory mode a which engineers the Hamiltonian $H/_\hbar = g_2(a^2 - \alpha^2)b^\dagger + \text{h.c.}$, where $b$ is the photon annihilation operator of the buffer mode b provided the mode frequencies verify substantially $2f_a = f_b$ and $g_2 < \kappa_b$ to which a drive of the buffer mode at frequency $f_b$ is added.

The present invention is generic and is not limited to a specific stabilization scheme. Indeed, one or more of the above schemes can be used in isolation or in combination to stabilize a two-legged or a multi-legged cat qubit.

In the context of Figure 1, in embodiments wherein the quantum system 1 is for hosting a cat qubit via dissipative stabilization, the quantum circuit 3 may be a circuit fabricated out of superconducting material comprising of various resonators, transmission lines, capacitors, inductors, and Josephson junctions, and may be arranged to make possible three- or four-wave mixing between a first physical oscillatory mode a and a second physical oscillatory mode b.

In the following, the first physical oscillatory mode a is used as a memory hosting a cat qubit, while the second physical oscillatory mode b is used as a buffer in between the cat qubit and the external environment. As will be understood, the physical oscillatory mode(s) could be any physical dynamical oscillation suitable for hosting a qubit, such as electromagnetic, magnonic (spin), phononic (acoustic), plasmonic etc. The at least one resonant portion is a physical structure in that it is configured to enable the physical oscillatory mode(s) to live and oscillate therein, such as a superconducting resonator in which electromagnetic wave(s) oscillate, or a variety of electrodes and lasers configured to trap ions in potential wells defined thereby. Hereafter, the identifier "physical oscillatory" will be dropped when referring to modes.

The first mode a and the second mode b each correspond to natural resonant frequencies of the non-linear superconducting quantum circuit 3. Consequently, the first mode a and the second mode b each have a respective resonant frequency. The first mode a has a resonant frequency $f_a = \frac{\omega_a}{2\pi}$ and the second mode b has a resonant frequency $f_b = \frac{\omega_b}{2\pi}$, where $\omega_a$ and $\omega_b$ are the respective angular frequencies of the first mode a and the second mode b.

By "having" a first mode and a second mode, it should be understood here that the non-linear superconducting quantum circuit 3 comprises components operating in a superconducting regime which host the modes independently of each other or concurrently. In other words, the first mode a and the second mode b may be hosted in different subsets of components of the superconducting circuit or on the same subset of components.

The memory mode a has a high-quality factor $Q_a$ while the buffer mode b has a low-quality factor $Q_b$. As will be appreciated, the quality factor (Q-factor) can be determined in various ways, for instance by: (a) spectroscopic linewidth measurement, wherein the quality factor is given by $Q = f/\Delta f$, wherein $f$ is resonant frequency and $\Delta f$ is the spectroscopic linewidth; or (b) via a time-domain measurement wherein a tone is sent in, and a return signal is measured after a pre-determined time, wherein $Q = f * \tau$ with $\tau$ the characteristic decay time. Of course, the skilled person would be aware of various other methods for determining the quality factor of a particular mode.

Said otherwise, the buffer mode b is more dissipative than the memory mode a. For instance, if the single-photon dissipation rate for the memory mode a is $\kappa_a$ and for the buffer mode b is $\kappa_b$, then the ratio is $\kappa_a/\kappa_b \ll 1$ (such that the single photon loss is far greater from the buffer mode than from the memory mode). In particular, $\kappa_b$ may typically be $\kappa_b \ll 8g_2\alpha$, where $g_2$ is the 2-to-1 photon exchange strength and $\alpha$ is the amplitude of the superposed coherent states forming the cat qubit.

The non-linear superconducting quantum circuit 3 is intended to be subject to electromagnetic radiation delivered by the command circuit 5 in order to engineer various non-linear interactions between the first mode a and the second mode b. The frequency of each electromagnetic radiation is tuned to select specific terms within the rotating wave approximation. Typically, for superconducting materials such as aluminium, the electromagnetic radiation used herein may be in the microwave regime.

The non-linear superconducting quantum circuit 3 comprises a non-linear element 7 and at least one resonant portion 9. The non-linear element 7 may be a four-wave mixing non-linear element, such as an ATS or Josephson junction suitable for parametric dissipative stabilization schemes such as scheme (A) above, or one or more Josephson junctions suitable for a DC dissipative stabilization scheme corresponding to scheme (G) above. The non-linear element 7 can also be a three-wave mixing non-linear element, for example a superconducting non-linear asymmetric inductive element (SNAIL) or other three-wave mixing non-linear elements in the case of a resonant dissipative stabilization which corresponds to stabilization scheme (H) above.

The resonant portion 9 is arranged to be connected to the non-linear element 7 to provide the non-linear superconducting quantum circuit 3 with the first mode a and the second mode b having respective resonant frequencies $f_a$ and $f_b$. More particularly, the first mode a and the second mode b "participate" in the non-linear element 7, which means that a portion or the entirety of the mode magnetic energy is stored in the non-linear element 7. Such a participation can be quantified by the zero-point fluctuation of the superconducting phase across the non-linear element 7, noted $\varphi_a$ for the first mode a and $\varphi_b$ for the second mode b.

In the schematic diagram of the quantum system 1 illustrated in Figure 1, the non-linear superconducting quantum system 3 comprises only one resonant portion, i.e. the resonant portion 9. This may be achieved via design of the resonator (e.g. various capacitances and inductances as defined for instance by the resonator geometry) such that it hosts modes of different frequencies. The design may also result in the modes having different engineered quality factors.

However, in general it should be understood here that the non-linear superconducting quantum system 3 comprises at least one resonant portion, and typically two or more resonant portions to form the two electromagnetic modes, which act as a cat qubit "memory" mode and a buffer mode.

The first resonator potion may be provided by a 3D resonator, such as a cavity machined out of high purity aluminium (e.g. above 99.99% purity). Similarly, the second resonator portion may provided as an antenna-like cavity. Alternatively, the first and second resonator potions may be provided by a 2D resonator, such as a co-planar waveguide design. Some resonator portions may be 3D, some may be 2D. In either case, such superconducting resonators are considered electromagnetic resonators and the modes hosted therein are electromagnetic modes.

Although electromagnetic resonators are convenient for design and control purposes, the resonator portions need not necessarily be electromagnetic resonators. In particular, for the first resonator portion which hosts the cat qubit, it could be a nanomechanical resonator, such as phononic-crystal-defect resonators (PCDRs), similar to those described in P. Arrangoiz-Arriola, E. A. Wollack, Z. Wang, M. Pechal, W. Jiang, T. P. McKenna, J. D. Witmer, R. Van Laer, and A. H.

Safavi-Naeini's work, "Resolving the energy levels of a nanomechanical oscillator," published in Nature 571, 537 (2019). These PCDRs are periodically patterned suspended nanostructures that support localized acoustic resonances in the gigahertz range. They are made from a piezoelectric material like LiNbO3, enabling the coupling of these resonances to superconducting circuits with nearly the same efficiency as standard electromagnetic cavities. Specifically, quasi-one-dimensional PCDRs made from lithium niobate, a piezoelectric crystalline material, could be used, with modes localized within a volume less than 1 $\mu$m3 of a suspended nanostructure.

In such acoustic resonators, the cat qubit is encoded in the phonons of the resonator.

Other types of acoustic resonators, such as acoustic membranes, also exist. The primary requirement is an acoustic-to-electromagnetic coupler, to couple the acoustic first resonator portion to the non-linear element 7.

Furthermore, other types of resonators may be used, such as a magnetic resonator wherein the quanta of oscillations are magnons (collective spin excitations). An example could be a designed yttrium-ion-garnet (YIG) particle, as described in Kounalakis, Marios, Gerrit EW Bauer, and Yaroslav M. Blanter. "Analog quantum control of magnonic cat states on a chip by a superconducting qubit." Physical review letters 129.3 (2022): 037205. Again, there is a requirement to couple magnetic first resonator portion to the non-linear element 7. Yet another type of resonator suitable for hosting cat qubits could be semiconductor double quantum dots embedded in a cavity such as a split-ring resonator cavity as disclosed in Kozin, Valerii K., et al. "Quantum phase transitions and cat states in cavity-coupled quantum dots." Physical review research 6.3 (2024): 033188.

Thus, herein a cat qubit may be encoded in the bosons of the resonator. Herein, for the sake of simplification, the 2-to-1 boson exchange is a 2-to-1 photon exchange, however it will be appreciated that all reference to photons and photon exchange regarding the first mode which hosts the cat qubit can be replaced with bosons or boson exchange (e.g. acoustic phonons, or magnons, or indeed plasmons).

The command circuit 5 is arranged to deliver control signals, such as electromagnetic radiation or DC voltage biases. To this end, as illustrated in Figure 1, the command circuit 5 comprises signal generators in the form of at least a first mode drive 11 and a second mode drive 13. For instance, the command circuit 5 may be arranged at least to drive the second mode b using the second mode drive 13 by delivering radiation at a frequency substantially equal to the second resonant frequency $f_b$ to the resonant portion 9. Similarly, the command circuit 5 may be arranged at least to drive the first mode a using the first mode drive 11 by delivering radiation at a frequency substantially equal to the first resonant frequency $f_a$ to the resonant portion 9.

By "a frequency substantially equal to", it should be understood that, ideally, the frequency is exactly equal to the desired value. However, in practice, the frequency value deviates from the desired value, typically by 1 or even 5%, due to the inherent precision of the hardware used.

Moreover, as will be understood, the frequency of a mode may be shifted in use. For instance, under certain dynamical interactions such as application of an electromagnetic pump to the resonant portion 9, the frequencies of the first mode a and the second mode b may be effectively shifted (e.g. AC or DC Stark shifted) due to the presence of a static potential or dynamical interaction. However, the skilled person would be well aware of characterising such effective frequencies, and for simplicity herein, by the first mode a and the second mode b "having" respective resonant frequencies $f_a$ and $f_b$, it will be understood as static meaning "un-dressed" frequencies or shifted "dressed" frequencies when in the presence of a dynamical interaction, depending on the situation. The skilled person would be well-aware of how to determine whether the frequency of an input signal is "substantially equal" to the frequency of a mode of a resonant portion, whether "un-dressed" or "dressed" under a dynamical interaction, e.g. via simple spectroscopy measurements, as described for instance in Lescanne, Raphaël, et al. "Exponential suppression of bit-flips in a qubit encoded in an oscillator." Nature Physics 16.5 (2020): 509-513, Berdou, Camille, et al. "One hundred second bit-flip time in a two-photon dissipative oscillator." PRX Quantum 4.2 (2023): 020350, and Réglade, Ulysse, et al. "Quantum control of a cat qubit with bit-flip times exceeding ten seconds." Nature (2024): 1-6.

Figure 2 illustrates an embodiment in which a single qubit-hosting structure 6 is arranged to perform the parametric dissipative stabilization to stabilize a cat qubit (i.e. a cat-qubit-hosting structure 6), wherein the non-linear element 7 is an ATS. An ATS is an inductive dipole element formed by a pair of Josephson junctions (indicated by the crosses and $E_J$ label in Figure 2) being shunted by an inductance (indicated by the $E_L$ label in Figure 2). The inductance may be formed for instance from a linear array of Josephon junctions. The Josephson junctions are each arranged on a different superconducting path such that they each form a distinct loop with the inductance, such that the ATS can be viewed as two superconducting loops connected by the shared edge which comprises the inductance. The ATS is thus sensitive to the magnetic flux threaded through each of the two loops.

The at least one resonant portion 9 is coupled via a linear coupler 15 to the ATS 7 which acts as an inductive element, such that the first mode a and the second mode b participate in the ATS 7. Example of embodiments for the linear networks which form the at least one resonant portion are known. For instance, among these embodiments, the non-linear superconducting quantum circuit 3 can be a two-mode hybridized system (also known as "galvanic cat", for which the Applicant has filed patent application EP22306815.6 and EP22306816.4) for which two lumped modes couple strongly via the ATS.

It is known to the skilled person that an ATS can be used to engineer in general a 2-to-1 boson conversion, i.e. the first term $a^2$ of the jump operator $L_2^\alpha$, in order to perform a parametric dissipative stabilization More particularly, a 2-to-1 photon conversion between the first mode a and the second mode b is obtained by parametrically pumping the ATS at the frequency $f_p = |2f_a - f_b|$, as successfully shown by Lescanne, Raphaël, et al. "Exponential suppression of bit-flips in a qubit encoded in an oscillator." Nature Physics 16.5 (2020): 509-513. Advantageously, the pump frequency satisfies $f_p >> g_2$ to make this parametric pumping work as well as possible.

It is known to the skilled person that, in the case of the non-linear element 7 being an ATS 7, when biased at its flux working point also known as the "saddle point" (0 - $\pi$, namely 0 flux threaded through one of the loops and $\pi$ flux in unit of the flux quantum threaded through the other of the loops), the Hamiltonian of the ATS 7 has the following "sin-sin" form:

$$H_{ATS} = -2E_J \sin\left(\varphi_\Sigma(t)\right) \sin(\varphi) + \frac{E_L}{2}\left(\varphi - \varphi_\Delta(t)\right)^2,$$

where $\varphi = \varphi_a(a + a^\dagger) + \varphi_b(b + b^\dagger)$ is the total superconducting phase difference across the ATS 7, $\varphi_a$ is the zero-point fluctuation of the phase of the first mode a across the ATS 7 and $\varphi_a$ is the zero-point fluctuation of the phase of the second mode b across the ATS 7, $E_J$ is the Josephson energy of the side junctions and $E_L$ is the inductive energy of a central inductance, $\varphi_\Sigma(t)$ corresponds to a common flux modulation of the two loops of the ATS 7 and $\varphi_\Delta(t)$ corresponds to a differential flux modulation of the two loops of the ATS 7. The former can be implemented by delivering electromagnetic radiations through flux lines of the ATS 7 out of phase, the latter can be implemented by delivering electromagnetic radiations through the two flux lines of the ATS 7 in phase.

Parametric pumping of the ATS 7 is typically done by pumping the common flux as pumping the differential flux merely displaces the modes coupled to the ATS 7. As an example, by pumping the common flux at the frequency $f_p = |2f_a - f_b|$, $\varphi_\Sigma(t) = \varepsilon_{2ph}\cos(2\pi f_p t)$, the non-linear resonant part of the Hamiltonian writes in the rotating frame:

$$H_{ATS} = (E_J \epsilon_{2ph} \varphi_a^2 \varphi_b / 2) * (a^2 b^\dagger + \text{h. c.}),$$ which is typically the two-to-one photon exchange Hamiltonian needed to engineer the two-photon stabilization.

When an external DC magnetic field is set such that a 0 mod $2\pi$ magnetic flux threads one of the loop and a $\pi$ mod $2\pi$ flux threads the other loop, it is ensured that the ATS Hamiltonian has its "sin-sin" form. For clarity, the set-up applying the external DC magnetic field is not drawn on Figure 1 but can be applied via the two bottom mutual inductances of the ATS 7. A typical implementation consists in interleaving a bias-tee connected to a DC current source to input DC current into the system while letting the electromagnetic radiations go through. As will be described below, the components which generate the required magnetic fields are current-carrying flux bias lines close to the ATS 7.

The cat-qubit-hosting structure 6 comprises a further signal generator in the form of an electromagnetic source 17 which is set-up to modulate the common flux in the ATS 7. For this purpose, a electromagnetic network 19 is used to split the radiation emitted by the electromagnetic source 17 and apply it to each node of the ATS 7 with the correct phase. Alternatively, two different electromagnetic sources could be used, each being simply coupled to a single node of the ATS 7 and their relative phase and amplitude being set so as to achieve the desired flux modulation.

When the electromagnetic source 17 is set at the frequency $|2f_a - f_b|$, the non-linear superconducting quantum circuit 3 performs the 2-to-1 photon conversion between the first mode a and the second mode b. To convert this 2-to-1 photon conversion into two-photon dissipation, the second mode b is selectively coupled to a load 21 via a linear coupler 23 and a electromagnetic filter 25 configured as a band pass filter with a frequency $f_b$.

Alternatively, the electromagnetic filter 25 may be configured as a band stop filter at a frequency $f_a$ and may be placed in between, on the one hand, the external environment and, on the other hand, the first mode a and the second mode b to isolate the first mode a and thus prevent the first mode a from suffering additional losses coming from unwanted coupling to the load 21.

Alternatively, it may be configured as a low-pass (respectively high-pass) filter if $f_a > f_b$ (resp $f_b > f_a$). In other embodiments, the electromagnetic filter 25 can be omitted when coupling between the load 21 and substantially only the second mode b can be established. The skilled person thus understands that the first mode a has a high-quality factor while the second mode b has a low-quality factor.

As previously explained, the second mode b is driven at its resonant frequency $f_b$. This two-photon drive is performed by a electromagnetic source 13 set at frequency $f_b$.

In the above, the load 21 can be seen as part of the command circuit 5 of figure 2, while the linear coupler 23 and the electromagnetic filter 25 can be seen as part of the non-linear superconducting quantum circuit 3.

The command circuit 5 of cat-qubit-hosting structure 6 may further comprise signal-generators in the form of a electromagnetic source 11 and a electromagnetic source 27. In addition to stabilizing the cat qubit, the command circuit 5 also enables measurement an observable of the cat qubit or application of a quantum gate to the cat qubit.

The electromagnetic source 11 may be arranged to drive the first mode a by delivering electromagnetic radiation

at the frequency $f_a$ to the linear electromagnetic network b/a. Such a drive of the first mode a causes the non-linear superconducting quantum circuit 3 to engineer a Hamiltonian Hz expressed as $H_z/\hbar = \epsilon_z a + \mathrm{h.c.}$, where the complex rate $\varepsilon_z$ results from the amplitude and phase of the drive of the first mode a.

An additional signal generator in the form of another electromagnetic source may be set-up, in addition to the electromagnetic source 17, to contribute to the modulation of the common flux in the ATS 7. The additional electromagnetic source may be arranged to deliver electromagnetic radiation for causing the non-linear superconducting quantum circuit 3 to engineer a Hamiltonian. For instance, such a Hamiltonian may yield a so-called longitudinal coupling term between the first mode a and the second mode b, which may be used to apply a Z gate.

The electromagnetic source 27 is set-up to modulate the differential flux in the ATS 7 through the electromagnetic network 19. The electromagnetic source 27 can be used to reduce spurious Hamiltonian terms induced by the additional electromagnetic source. It is to be noted that the electromagnetic network 19 is used for convenience but can be omitted and the electromagnetic source 27 and any additional electromagnetic source could be applied directly to both nodes of the ATS 7, their relative phase and amplitude being set so as to achieve the desired flux modulation.

For the sake of completeness, it may also be noted that the electromagnetic source 27 can be used, instead of the electromagnetic source 13, to deliver electromagnetic radiation at a frequency $f_b$ to the linear electromagnetic network b/a to drive the second mode b.

Typically, the circuit has flux lines through which radiation can be delivered to provide (and optionally modulate) the common flux (herein also referred to as $\varphi_\Sigma$ or "sigma flux") and provide (and optionally modulate) the differential flux (herein also referred to as $\varphi_\Delta$ or "delta flux"). These are generally referred to as the two bias modes. As such, the flux lines may deliver both a DC-bias (setting the working point described above by applying DC current to thread the ATS loops with the relevant magnetic fluxes) and an RF-bias (superposed modulation to permit the time-dependent magnetic flux terms to "pump" the ATS as discussed above).

Finally, detector 8 is shown as being connected to the electromagnetic source 13 which delivers electromagnetic radiation at a frequency $f_b$ to the linear electromagnetic network b/a. Thus, as will be appreciated, a single line (e.g. transmission line) may be used to both input electromagnetic radiation and output a continuous signal. In this case, the continuous signal is output from the second mode b. In particular, the detector 8 may be configured for heterodryne detection of the fluorescence from the second mode b. As will be appreciated, other implementations of the detector is possible, for instance it could primarily be coupled for detection of the first mode a.

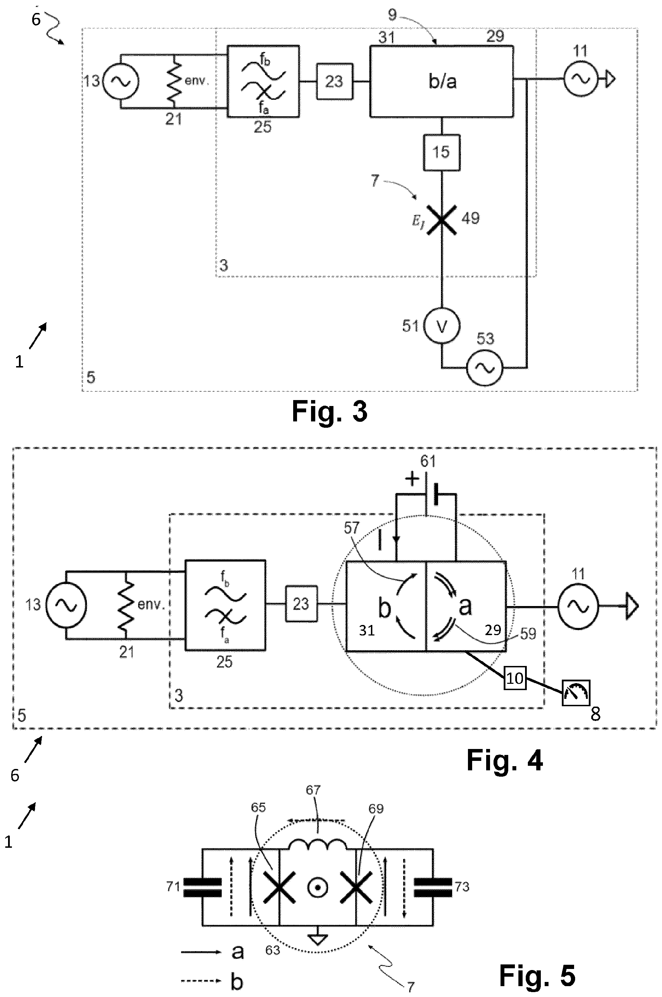

Figure 3 illustrates an embodiment in which the quantum system 1 is arranged to perform the DC dissipative stabilization to stabilize a cat qubit. The non-linear element 7 is a set of one or more Josephson junctions. In the example of Figure 3, the non-linear element 7 includes only one Josephson junction 49 for the sake of simplification.

Moreover, the at least resonant portion 9 includes a first resonant portion 29 and a second resonant portion 31 which confer the first mode a and the second mode b respectively to the non-linear superconducting quantum circuit 3. Compared to the quantum system 1 of Figure 2, the same reference signs have been kept for ease of understanding.

The first and second resonant portions 29, 31 take the form of an electromagnetic network which can be compared to that of the quantum system 1 illustrated in Figure 2 and is such that, when coupled via the linear coupler 15 to the non-linear element 7, the non-linear superconducting quantum circuit 3 has the first mode a and the second mode b at respective resonant frequencies $f_a$ and $f_b$ which participate in the non-linear element 7.

Similarly to the quantum system 1 of Figure 2, the electromagnetic radiation source 11 - which can be a microwave radiation source - is arranged to deliver electromagnetic radiation at the resonant frequency $f_a$ to the first resonant portion 29 to drive the first mode a; and the electromagnetic radiation source 13 - which can be a microwave radiation source - is arranged to deliver electromagnetic radiation at the resonant frequency $f_b$ to the second resonant portion 31 to drive the second mode b.

The second mode b is selectively coupled to the load 21 via the linear coupler 23 and the electromagnetic filter 25 - which can be an electromagnetic filter - configured as a band pass filter with a frequency $f_b$. Again, the electromagnetic filter 25 may be configured in a similar manner as described above for Figure 2.

Compared to the quantum system 1 of Figure 2, the command circuit 5 does not comprise anything functionally comparable to the two-photon pump 17, the electromagnetic network 19 nor electromagnetic radiation source 27. Instead, the command circuit 5 comprises the DC voltage source 51 and the electromagnetic radiation source 53 - which can be a microwave radiation source - to perform the 2-to-1 photon exchange between the first mode a and the second mode b.

The DC voltage source 51 is arranged to bias the non-linear element 7 with the delivered DC voltage having a value inducing an electromagnetic oscillation having a frequency substantially equal to $|2f_a - f_b|$ in the non-linear superconducting quantum circuit 3.

The electromagnetic radiation source 53 - which can be a microwave radiation source - is arranged to deliver electromagnetic radiation at a frequency substantially equal to the frequency of the electromagnetic oscillation induced by the DC voltage source 51 to cause injection locking thereof. Such an injection locking is particularly useful when the DC voltage source 51 is not an ideal DC voltage source, i.e. when the DC voltage source 51 induces voltage noise.

The DC dissipative stabilization is only one of the stabilization schemes concerned by the invention; consequently, the principle of the DC dissipative stabilization is explained briefly below.

The DC voltage source 51 delivers a constant voltage $V_{DC}$ across the Josephson junction 49. The phase of the Josephson junction 49 is denoted $\varphi_J$. At this stage, for simplicity, we can consider that the DC voltage source 13 is ideal, which means that the operation of the DC voltage source 51 does not generate voltage noise. An ideal DC voltage source can itself be made with a Josephson junction.

The Cooper pairs - also known as BCS pairs (Bardeen-Cooper-Schrieffer pairs) -, which are pairs of electrons bound together at low temperatures, travel the circuit with an energy equal to $2eV_{DC}$, where e is the elementary charge. In the environment set up by the Josephson junction 49, such an energy $2eV_{DC}$ is converted into photons with an angular frequency $\omega_{DC}$ equal to $2eV_{DC}/\hbar$ . It can thus be considered that the Josephson junction 49 acts as a "voltage-to-frequency converter". Consequently, the equation of motion can be described with the following differential equation:

$$\dot{\varphi}_J = \frac{2e}{\hbar} V_{DC} = \omega_{DC} .$$

Since the DC voltage $V_{DC}$ is constant over the time, the time evolution of the phase $\varphi_J$ can be expressed as follows: $\varphi_J(t) = \omega_{DC}t + \varphi_{J_0}$, where: $\varphi_{J_0}$ is the initial value of the phase $\varphi_J$, $\varphi_{J_0} = \varphi_J(0)$. The phase $\varphi_J$ thus varies linearly with time.

Nonetheless, the non-linear superconducting quantum circuit 3 of the quantum system 1 further comprises, in addition to the Josephson junction 49, the first resonant portion 27 corresponding to the memory mode a having a zero-point phase fluctuation $\varphi_a$ as well as the second resonant portion 29 corresponding to the buffer mode b having a zero-point phase fluctuation $\varphi_b$.

The value $V_{DC}$ of the DC voltage induces an electromagnetic oscillation having an angular frequency $\omega_{DC}$ such that $\omega_{DC} = \frac{2e}{\hbar} V_{DC}$ . Yet, since the DC voltage source 13 is intended to perform the 2-to-1 photon exchange which is for instance obtained with parametric pumping at a frequency $|2f_a - f_b|$ in the embodiment of Figure 2, the value $V_{DC}$ must be set such that the frequency $f_{DC}$ is equal to $|2f_a - f_b|$. Therefore: $f_{DC} = \omega_{DC}/2\pi = (1/2\pi)(2e/\hbar)V_{DC}$. Then, since the reduced Planck constant $\hbar$ is defined as $\hbar = h/2\pi$, we have $f_{DC} = (2e/h)V_{DC} = |2f_a - f_b|$. Thus, $V_{DC} = |2f_a - f_b|(h/2e)$.

The DC dissipative stabilization allows to obtain a two-photon coupling rate which is not determined - and thus limited - by the amplitude of any parametric pump: $g_2 = (E_J/4)\varphi_a^2\varphi_b$ , where $E_J$ is the Josephson energy of the Josephson junction 49.

In the case where the non-linear element 7 includes N Josephson junctions, where N is a strictly positive natural number, the value $V_{DC}$ of the DC voltage in order to induce an electromagnetic oscillation having a frequency substantially equal to $|2f_a - f_b|$ in the non-linear superconducting quantum circuit 3 is the following: $V_{DC} = N|2f_a - f_b|(h/2e)$.

Figure 4 illustrates an embodiment in which the quantum system 1 is arranged to perform resonant dissipative stabilization to stabilize a cat qubit, i.e. wherein the non-linear element 7 is a three-wave mixing non-linear element 7. Thus, in comparison with Figure 1, the non-linear element 7 and the at least one resonant portion 9 are brought together to form part of the non-linear superconducting quantum circuit 3, which explains why the reference signs "7" and "9" are absent from Figure 4. Here, the non-linear superconducting quantum circuit 3 is arranged to perform intrinsically the 2-to-1 photon exchange - symbolized here by a back-and-forth single arrow 57 and double arrows 59 - between the first mode a and the second mode b (denoted by reference numerals 29 and 31 to indicate hosting of the two modes).

Like reference numerals indicate features which are the same as described above in Figure 2. For instance, the electromagnetic radiation sources 11 and 13 are configured in the same manner as in Figure 2 to respectively drive the first mode a and the second mode b.

The command circuit 5 further comprises a current source 61 or applying a current to the non-linear element 7 and the at least one resonant portion 9. The current source 61 may be connected by wires (i.e. galvanically) to the non-linear element 7 and the at least one resonant portion 9, or may be a flux line for flux biasing a loop (e.g. of the non-linear element 7 as in Figure 5) to thereby induce a current flowing around the loop due to the magnetic flux therethrough. The current source 61 is arranged to deliver current which flows through one or more components of the non-linear superconducting quantum circuit 3. The current source 61 is configured to both allow three-wave mixing interaction and to tune the frequency matching condition $2f_a = f_b$, in particular by inducing a particular current flow across the three-wave mixing non-linear element 7 which enables tuning of the resonant frequencies of first mode a and the second mode b as they participate in the non-linear element 7.

Detector 8 in Figure 4 is shown as being coupled to the part 29 of the at least one resonant portion which predominantly hosts the first mode a. Specifically, a tomography transmon 10 may be coupled (e.g. capacitively coupled) to the part 29 of the at least one resonant portion, to which the detector 8 is coupled to read the state of the tomography transmon (e.g. reading a continuous signal through an associated intermediate readout resonator and Purcell filter). Of course, other implementations of the detector 8 again is possible, for instance it could primarily be coupled via the same line which inputs from the electromagnetic source 13 in a similar manner as in Fig. 2.

Figure 5 shows a possible circuit to realize the three-wave mixing non-linear element 7, which in this embodiment is formed by at least one loop 63 including a first Josephson junction 65, a central inductive element 67 and a second Josephson junction 69. Alternative embodiments of the three-wave mixing non-linear element 7 are described in EP21306965.1 filed by the Applicant.

Returning to Figures 4 and 5, when a predetermined current of a constant intensity is applied by the current source 61, the resonant frequency $f_b$ is substantially equal to twice the resonant frequency $f_a$. Said otherwise, what is important is that the superconducting circuit 3 has these structural features so linked, and that (regardless of the specific shape of the components) the resonance matching condition is satisfied when the constant current is applied. This current can be determined by the skilled person any number of known ways. In particular, what is important is that the non-linear element comprises at least one loop 63 including at least one Josephson junction therein, and that the resonant modes a and b at least partially participate in the loop.

The circuit shown in Figure 5 is particularly configured to discriminate symmetrically the memory mode a and the buffer mode b. The high symmetry of such a circuit achieves an improved quality of the 2-to-1 photon exchange, as well as to make the function of filter 25 integral to the flux line used to flux bias the loop 63 (which is also the second mode electromagnetic source 13). The relative position with respect to the loop 63, and the geometry, of the flux line which acts as the second mode electromagnetic source 13 enables coupling to the second mode whilst inherently filtering the first mode to prevent or substantially minimize coupling of the first mode a to the load (environment) 21.

The central inductive element 67 can be an inductance, a single Josephson junction or an array of Josephson junctions. The central inductive element 67 may thus be arranged between the first Josephson junction 65 and the second Josephson junction 69 as a loop in series. The arrangement in series may comprise a first inner node connecting a pole of the first Josephson junction 65 with a pole of the central inductive element 67. The arrangement in series may also comprise a second inner node connecting a pole of the second Josephson junction 69 with another pole of the central inductive element 67. The arrangement in series may also comprise a closed-loop node connecting another pole of the first Josephson junction 65 with another pole of the second Josephson junction 69.

The at least one loop 63 may be connected to a common ground via the closed-loop node. The circuit may also comprise a first capacitive element 71 and a second capacitive element 73. The first capacitive element 71 may be connected in parallel with the first Josephson junction 65 between the common ground and the first inner node of the loop. The second capacitive element 73 may be connected in parallel with the second Josephson junction 69 between the common ground and the second inner node of the loop.

The first Josephson junction 65 and the second Josephson junction 69 are substantially identical and the capacitive elements 71 and 73 are also substantially identical. Hence, the symmetry of the circuit implies that the memory mode a is the symmetric superposition of the two resonators (as shown by the full arrows) and the buffer mode b is the anti-symmetric superposition of the two resonators (as shown by the dashed arrows). It can be noticed that only the buffer mode b has a contribution across the central inductive element 67 which is advantageously used to preferentially couple the external environment to this buffer mode b while isolating the memory mode a from the external environment via the design of the electromagnetic source 13 as described above.

## Reset method

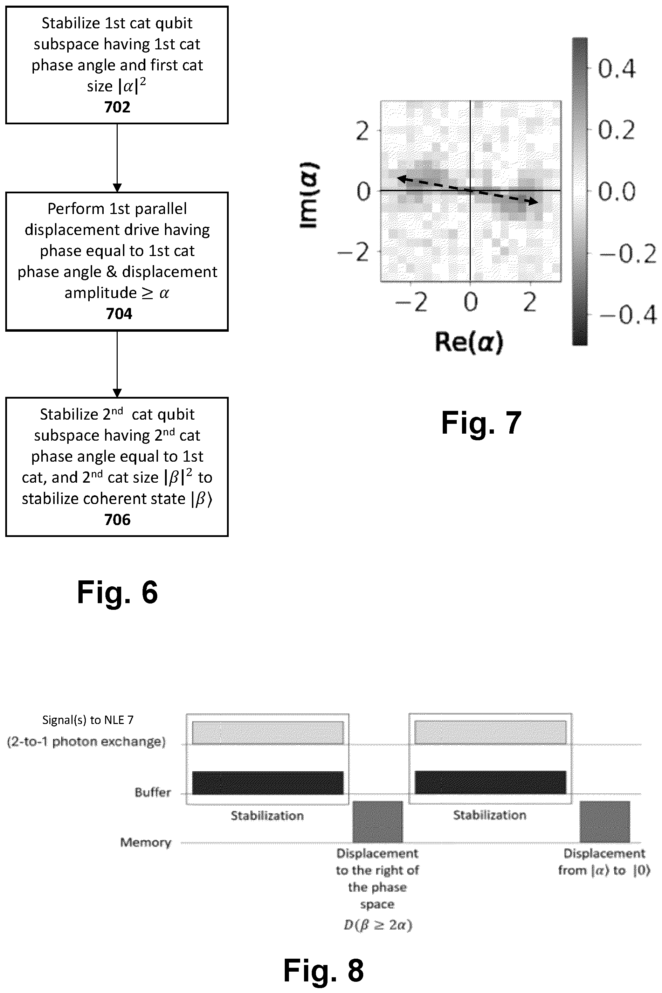

The present Inventors have developed a method for resetting an arbitrary state, hosted in a quantum system for stabilizing a cat qubit (e.g. as described in relation to Figures 1-5 above), to the vacuum Fock state or a coherent state $|\alpha\rangle$, as generally shown in Figures 6 according to an embodiment of the invention. The quantum system thus comprises: (I) at least one resonant portion configured to have a first mode having a first **resonant** frequency and wherein the arbitrary state is hosted in the first mode, (II) a non-linear element coupled to the at least one resonant portion so as to non-linearly couple to the first mode, and (III) one or more signal generator(s) coupled to the at least one resonant portion and/or to the non-linear element and configured to input control signals to physically stabilize a cat qubit subspace in the first mode having a cat phase angle.

In a first operation 702, the one or more signal generator(s) are used to stabilize a first cat qubit subspace having a first cat phase angle and first cat size $|\alpha|^2$, wherein $\alpha$ is the amplitude of the superposed coherent states $|\pm\alpha\rangle$ defining the first cat qubit subspace.

Subsequently, in a second operation 704, the one or more signal generator(s) are used to perform a first parallel displacement drive by inputting electromagnetic radiation having a first phase substantially equal with the first cat phase angle, a frequency substantially equal to the first resonant frequency, and a first displacement amplitude greater than or equal to the first amplitude, as described in more detail below.

Subsequently, in a third operation 706, the one or more signal generator(s) are used to stabilize a second cat qubit subspace having a second cat phase angle which is substantially equal to the first cat phase angle and second cat size $|\beta|^2$, wherein $\beta$ is a second amplitude which is the amplitude of the superposed coherent states $|\pm\beta\rangle$ defining the first cat qubit subspace, such that a coherent state $|\beta\rangle$ with the second amplitude $\beta$ is stabilized in the first mode, as described in more detail below.

Thus, the fundamental idea is to catch the field's arbitrary state in the code space through the cat stabilization mechanism, then to drive the resulting state sufficiently towards the right (respectively left) part of the phase plane with a displacement pulse $\mathcal{D}_\beta$ (respectively $\mathcal{D}_{-\beta}$), which is done by applying an electromagnetic drive having the memory resonant frequency and a phase equal (respectively $\pi$ out-of-phase) to the known cat qubit phase angle. The field state can then be caught within the $|\alpha\rangle$ (respectively $|-\alpha\rangle$) state by stabilization, provided that the displaced state is sufficiently into the right (respectively left) side of the phase space before the stabilization and that the stabilization is strong enough. The resulting state is thus a coherent state $|\alpha\rangle$ (respectively $|-\alpha\rangle$). Optionally, this coherent state can then simply be displaced back in the vacuum Fock state $|0\rangle$ with a displacement pulse $\mathcal{D}_{-\alpha}$ (respectively $\mathcal{D}_{-\alpha}$), which is $\pi$ out-of-phase to the known cat phase (i.e. "parallel" but opposite to the previous displacement pulse $\mathcal{D}_\beta$) (respectively equal to the known cat phase, i.e. "parallel" but opposite to the previous displacement pulse $\mathcal{D}_{-\beta}$). Given the method starting with the displacement to the right of the phase plane can be simply mapped to the method starting with the displacement to the left of the phase place via switching the signs of the x-axis, herein we will now only refer to the former.

Crucially, the arbitrary state initially existing in the memory will typically be the state resulting from previous steps of an algorithm or calibration protocol. The present inventive reset protocol can reset any arbitrary state residing in the memory resonator (or specifically, hosted in memory mode such as coherent or Fock states, or respective superpositions thereof).

As will be appreciated, the cat phase angle can be readily determined by any known method in the art, as described at least in the prior art mentioned above. What is important is the cat angle arg $(\alpha)$ of the coherent state $\alpha$ entering the superposition of $|\alpha\rangle + e^{i\phi}|-\alpha\rangle$ (where $\phi$ is a superposition phase of the state which is not the cat angle referred to herein). In particular, when sending electromagnetic pulse to induce a displacement, the angle of the displacement can also be determined (e.g. during a calibration protocol)..

Thus, for a known set of electromagnetic pulses and drives used to stabilize a given cat qubit, the phase of the cat qubit stabilized in the memory mode a may be measured using direct quantum state tomography. As shown in Figure 7, which is a Wigner tomograph of a cat qubit. The phase is given by the dashed double-arrowed line, which as mentioned is the phase (i.e. angle) of the complex number (coherent state) $\alpha$. In the context of Figure 7, the angle of each $\alpha$ "blob" with respect to the reference x-axis which corresponds to phase zero.. What is important herein is the phases of displacement drives relative to the cat qubit manifold to be stabilized. Thus, the reference x-axis in Figure 7 could be re-defined to be parallel to the dashed double-arrowed line, or the reference x-axis could be defined in another way (with the dashed double-arrowed line of the cat state then known relative to this reference x-axis). As will be appreciated, a Wigner tomograph is performed by performing a series of displacements with differing quadratures ($Re(\alpha)$ and $Im(\alpha)$), and performing a parity measurement for each displacement, the quadrature pairing defining the pixel and the measured parity defining the pixel shade strength. Notably, after the Wigner protocol, there is no re-catch step.

Alternatively to performing a Wigner tomography, the phase can be determined by, for instance, measuring bit-flips during a Z-gate and deducing the cat phase therefrom.

For instance, (i) inflate a $|C_\alpha^+\rangle$ cat state, or $|C_\alpha^-\rangle$ state, or a "dead" cat state, an equal superposition or statistical mixtures of +/- $\alpha$; (ii) apply a drive at the memory frequency for time t with a known phase, wherein t is at least $1/\kappa_2$ in length; (iii) measure the population in $+\alpha$ and $-\alpha$; (iv) repeat (ii)-(iii) for various different phases; (v) choose phase which maximises the population in +/- $\alpha$. This gives the phase of the electromagnetic signals needed to be applied on the hardware such that the displacement and the cat state have equal phase angles (i.e. "parallel" phase).

Thus, the electromagnetic drive having the memory resonant frequency and a phase parallel to the known cat qubit phase angle (i.e. equal phase angles) are performed by driving with a phase parallel to the dashed double-arrowed line in Figure 7. For instance, in reference to Figures 1-4, when the memory drive 11 is turned on, it emits an electromagnetic pulse whose variation as a function of time t is of the following form: $\varepsilon_m(t) = \varepsilon_m e^{i\omega m t}$, where: $\varepsilon_m$ is the complex amplitude of the memory drive 11, and $\omega_m$ is the angular frequency of the memory drive 11. The amplitude and phase of the memory drive 11 correspond to the amplitude and phase of the complex number $\varepsilon_m$ respectively. In other words, $\theta_m^c$ is the phase of the complex number $\epsilon_m$ ($\theta_m^c = \arg(\epsilon_m)$), and in the resent method is chosen to be equal to the aforementioned known phase of the stabilized cat qubit.

Figure 8 shows a schematic pulse sequence for resetting an arbitrary state initially existing in the memory to the coherent state $|\alpha\rangle$ or to the vacuum Fock state $|0\rangle$, according to an embodiment.

A first stabilization period is performed by driving the buffer mode at the buffer frequency whilst simultaneously engineering the two-to-one boson exchange interaction between the memory mode and the buffer mode (e.g., via parametrically pumping the ATS 7 of Figure 2, or DC-biasing the Josephson junction 7 of Figure 3, or applying a current to the three-wave mixing non-linear element 7 of Figure 4, or any other mechanism for engineering the two-to-one boson exchange interaction). This first stabilization period catches the state in the relevant cat qubit code space.

The first stabilization period may last for at least $1/|\alpha|^2\kappa_2$ with $|\alpha|^2$ the cat size to be stabilized by the first stabilization period, for instance in a typical system at least $1/\kappa_2$, such that the state at the end of this period substantially resides in the cat Bloch sphere (whether on the surface in the cat code subspace or within the bulk of the sphere describing statistical mixtures). This for instance can be verified again via a Wigner tomography. As will be appreciated, prior calibrations of the system yields the relevant control parameters needed to confine the arbitrary state in the memory a to the cat qubit subspace (e.g., buffer drive strength, parameters of the parametric pump on the ATS 7, length of the stabilization period, etc.).

Subsequently, a first parallel displacement drive is performed by inputting electromagnetic radiation having a phase substantially equal to the known cat qubit phase of the cat qubit code space and a frequency substantially equal to the memory resonant frequency. This first parallel displacement drive, also known as a displacement pulse, has a displacement amplitude greater than or equal to $\alpha$ of the first stabilization period. The displacement amplitude is the translation in phase space along the axis defined by the cat phase, i.e. is the complex amplitude of the displacement applied by the drive. In the embodiment of Figure 8, the displacement amplitude is greater than or equal to twice $\alpha$, $\mathcal{D}_{\beta \geq 2\alpha}$. In the embodiment of Figure 8, the cat qubit stabilization is turned off for the performance of the first parallel displacement drive.

Subsequently, in Figure 8, a second stabilization period is performed so as to stabilize the $|\pm\alpha\rangle$ states, which catches the field in $|\alpha\rangle$. This second stabilization period is performed in a similar manner to the first stabilization period, namely by driving the buffer mode at the buffer frequency whilst simultaneously engineering the two-to-one boson exchange interaction between the memory mode and the buffer mode. As will be appreciated, if the first parallel displacement drive and the second stabilization are both strong enough, the field in the memory resonator is brought substantially to the field in $|\alpha\rangle$. In other embodiments, and as will become clear below, for optimization purposes (namely increasing the fidelity of the overall method), the second stabilization period may be for stabilizing a cat qubit subspace having a cat size different to that of the first stabilization period.

Optionally, the protocol may be extended to further reset to the vacuum Fock state. This is achieved by performing a second parallel displacement drive by inputting electromagnetic radiation having a phase substantially "parallel" but opposite that of the first parallel displacement drive (namely having a phase angle which is substantially $\pi$ out-of-phase to the phase angle of the first parallel displacement drive) and a frequency substantially equal to the memory resonant frequency. This second parallel displacement drive, also known as a displacement pulse $\mathcal{D}_{-\alpha}$, in the context of Figure 8 requires an amplitude to substantially evacuate the population hosted in the memory to the vacuum Fock state. In the embodiment of Figure 8, the cat qubit stabilization is also turned off for the performance of the second parallel displacement drive. In embodiments, for optimization purposes (namely increasing the fidelity of the overall method), the second parallel displacement drive may be optimized to get as few photons/bosons as possible in the memory by the end of the displacement drive (for instance, the pulse shape of the drive may be optimized, etc.).

As will be appreciated, herein the parallel displacement drives are so-named as they have a drive phase angle which is either substantially equal to or substantially $\pi$ out-of-phase to the known phase angle of stabilized cat subspace.

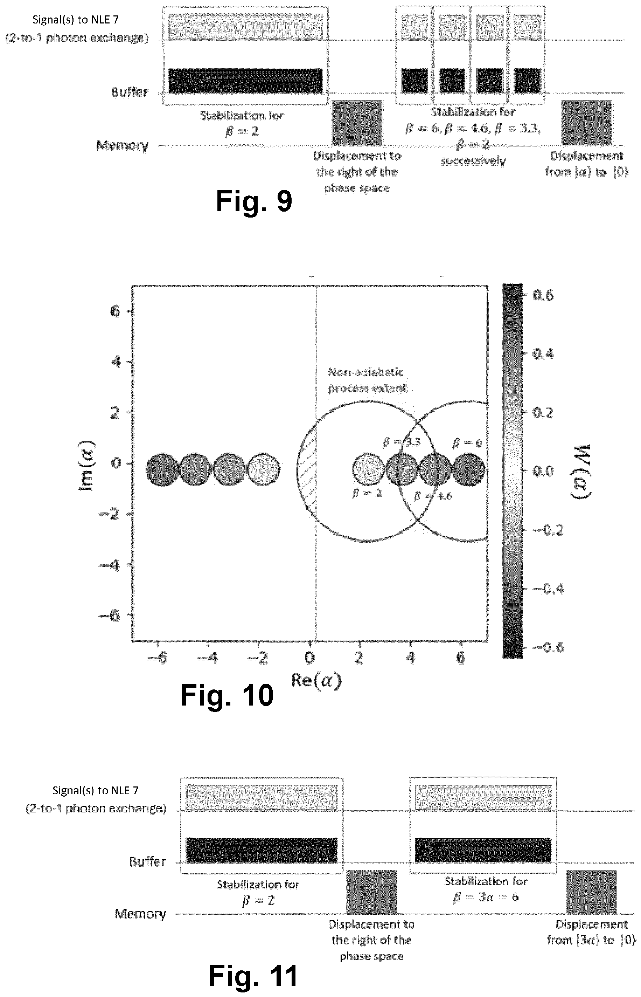

Figure 9 shows a schematic pulse sequence for resetting an arbitrary state initially existing in the memory to the coherent state $|\alpha\rangle$ or to the vacuum Fock state $|0\rangle$, according to an embodiment.

Again, a first stabilization period is performed by driving the buffer mode at the buffer frequency whilst simultaneously engineering the two-to-one boson exchange interaction between the memory mode and the buffer mode to catch the state in the relevant cat qubit code space. In the example of Figure 9, the first stabilization period is to stabilize a cat code space with $\beta = \alpha = 2$, although this is only exemplary, and other cat sizes may of course be selected.

Subsequently, a first parallel displacement drive in a similar manner as described above in reference to Figures 7 and 8. Similar to Figure 8, in the embodiment of Figure 9, the cat qubit stabilization is turned off for the performance of the first parallel displacement drive.

Subsequently, a second stabilization period is performed so as to stabilize the $|\pm\alpha\rangle$ states, which catches the field in $|\alpha\rangle$. This second stabilization period is comprised of a number of stepped stabilizations having different stabilization strengths and/or durations so as to stabilize different cat qubit subspaces having different cat sizes , i.e., configured to first catch the field in a larger coherent state and progressively decrease the size of the coherent state. Each of the stepped stablizations thus drive the buffer mode at the buffer frequency whilst simultaneously engineering the two-to-one boson exchange interaction. For instance, first stepped stabilization is configured to catch the field in $|\beta = 3\alpha\rangle$ (which is $|\beta = 6\rangle$ in the specific example of Figure 9). The next stepped stabilizations are configured to successively bring the state to $|\beta = 4.6\rangle$, $|\beta = 3.3\rangle$, and then $|\beta = 2\rangle$ (i.e. $|\beta = \alpha\rangle$). As will be appreciated, each stepped stabilization is long enough and strong enough for the system to reach the corresponding steady state defined by the desired amplitudes of the coherent states.

For instance, each stepped stabilization may last a period of between one (or a few) $1/(N * \kappa_2)$ to one (or a few) $1/\kappa_2$, where $N$ denotes the different cat size for each stepped stabilization.

In an alternative embodiment, the cat sizes of the subspaces are decreased in a continuous manner, as opposed to continuous.

Thus, decreasing $\beta$ in this stepped or continuously decreasing manner may progressively bring the field to the desired code space defined by amplitude $\alpha$. By making the second stabilization period a stepped or continuously decreasing process, the protocol may be less sensitive to non-adiabatic processes, since the successive steady states would be closer to the corresponding position of the field, minimizing $|\alpha - \beta|$. This is schematically illustrated in Figure 10 in a conceptual manner, which conceptually denotes the extent of non-adiabatic field leakage of the specific example of Figure 9. In particular, for stabilization with $\beta = \alpha = 2$, the extend of the non-adiabatic processes conceptually induces field leakage to the left side of the plane as indicated by the circle partially overlapping the left side of the plane, as the $|\alpha\rangle$ is too close to the middle of the plane. For the second circled stabilization with $\beta = 3\alpha = 6$ however, the two stabilized states are further apart, and the stabilization catches all the field in the $|+\beta\rangle$ state despite the non-adiabatic processes.

Similar to Figure 8, Figure 9 shows an optional second parallel displacement drive by inputting electromagnetic radiation having a phase substantially $\pi$ out-of-phase with that of the first parallel displacement drive and a frequency substantially equal to the memory resonant frequency whilst the cat qubit stabilization is turned off. This second parallel displacement drive $\mathcal{D}_{-\alpha}$ thus displaces the memory from $|\alpha\rangle$ to the vacuum Fock state $|0\rangle$.

Figure 11 shows a schematic pulse sequence for resetting an arbitrary state initially existing in the memory to the coherent state $|\alpha\rangle$ or to the vacuum Fock state $|0\rangle$, according to an embodiment.

The first stabilization period and the first parallel displacement drive for the example of Figure 11 are the same as those described above in relation to Figures 9-10.

The second stabilization period is performed so as to stabilize the $|\pm \beta = \pm3\alpha\rangle$ superposition coherent states of the cat subspace, which catches the field in the $|\beta = 3\alpha = 6)$ state. The second stabilization period differs from that described above in relation to Figures 9-10 in that it is comprised of a single strong stabilization period. Optionally, a second parallel displacement drive is performed by inputting electromagnetic radiation having a phase substantially $\pi$ out-of-phase with that of the first parallel displacement drive and a frequency substantially equal to the memory resonant frequency whilst the cat qubit stabilization is turned off. This second parallel displacement drive $\mathcal{D}_{-3\alpha}$ is larger than that described in the examples of Figures 8-10, as it is configured to displace the memory from $|3\alpha\rangle$ to the vacuum Fock state $|0\rangle$.

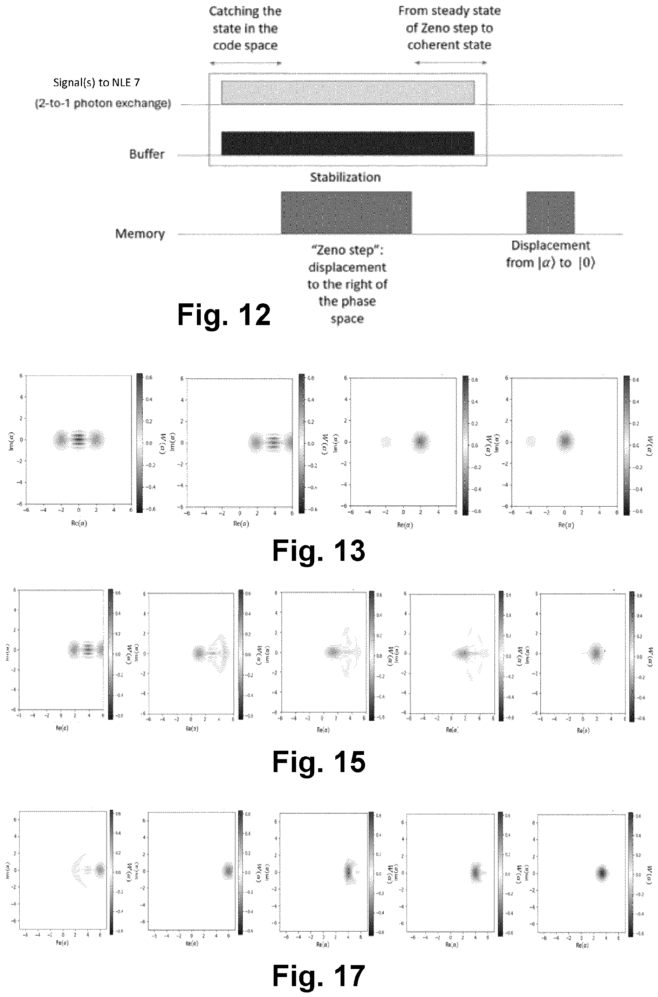

Figure 12 shows a schematic pulse sequence for resetting an arbitrary state initially existing in the memory to the coherent state $|\alpha\rangle$ or to the vacuum Fock state $|0\rangle$, according to an embodiment.

A first stabilization period is performed by driving the buffer mode at the buffer frequency whilst simultaneously engineering the two-to-one boson exchange interaction between the memory mode and the buffer mode to catch the state in the relevant cat qubit code space.

Subsequently, a first parallel displacement drive is performed in a similar manner as described above. Different to the embodiments of Figures 8-11 however, the stabilization is maintained in a continuous manner whilst the first parallel displacement drive is performed.

It is noted that here, as the stabilization is maintained, the "continuous stabilization" parallel displacement drives are similar to the so-called Zeno gate, which is one of the noise bias-preserving qubit gates suitable for cat qubits required to achieve a set of fault-tolerant operations, as described in Guillaud, Jérémie, and Mazyar Mirrahimi. "Repetition cat qubits for fault-tolerant quantum computation." Physical Review X 9.4 (2019): 041053. During a Zeno gate, a drive pulse is applied at the memory frequency during cat stabilization (with a phase angle $\pi/2$ out-of-phase with the cat phase angle) to change the cat's phase, the duration of which governs the amount of rotation in a Zeno-blocked manifold around the qubit's Z-axis in the Bloch sphere representation (for instance, one can perform a $\pi$ rotation around the qubit's Z-axis in the Bloch sphere representation). A Zeno gate is described for instance in Réglade, Ulysse, et al. "Quantum control of a cat qubit with bit-flip times exceeding ten seconds." Nature (2024): 1-6 and Marquet, Antoine, et al. "Autoparametric resonance extending the bit-flip time of a cat qubit up to 0.3 s." Physical Review X 14.2 (2024): 021019. Herein lies a key efficiency of the present invention. By calibrating the $\pi/2$ out-of-phase angle of the Zeno drive, one also inherently calibrates the phase angle of the parallel displace drives (via simply adding an addition $\pi/2$ to the calibrated Zeno drive phase).

Said otherwise, the difference between the parallel displacement drive described herein and the conventional Zeno gate is that the phase of the memory drive relative to the phase of the cat qubit code space is 0 (or parallel) for the parallel displacement drive, as opposed to $\pi/2$ for the Zeno gate. The effect of the parallel displacement drive can be understood as pushing the state in the corresponding direction in phase space, inducing asymmetrical bit-flip rates which are maximal along the axis of the cat. As such, the present inventive protocol may be calibrated at the same time as the inevitably necessary Zeno gate, thus reducing the overhead in calibration operations, and further reducing the hardware operations as the parallel displacement drive can use the exact same signal generator and drive transmission line as used for the Zeno gate.

Thus, after the end of the first parallel displacement drive, a second stabilization period is performed, which can be understood as a continuation of the preceding stabilization.

Optionally, a second parallel displacement drive is performed by inputting electromagnetic radiation having a phase substantially $\pi$ out-of-phase with that of the first parallel displacement drive and a frequency substantially equal to the memory resonant frequency whilst the cat qubit stabilization is turned off, configured to displace the memory from the coherent state, resulting from the preceding steps, to the vacuum Fock state $|0\rangle$.

Of course, the pulse sequence of the embodiments of Figures 8-12 described above could equally be for resetting an arbitrary state initially existing in the memory to the coherent state $|-\alpha\rangle$ via simply rotation the phase of the first parallel displacement drive by $\pi$ as compared to the above, and similarly further taking the field to the vacuum Fock state $|0\rangle$ would require performing the second parallel displacement drive as described above but suitably rotated by $\pi$.

Moreover, the specific choices of the relative amplitudes of the coherent states are only exemplary, chosen to correspond to the numerical simulations described below.

Although select dissipative stabilization schemes have been described above, it is noted that the present invention can be applied to any cat qubit, e.g. the so-called Kerr cat qubit which may be stabilized using schemes (B) and (C) described above or the "TPE" Hamiltonian stabilization using scheme (D) above. What is important is to know the phase (i.e. angle) of the stabilized cat which can be determine any number of ways, for instance as described in Grimm, Alexander, et al. "Stabilization and operation of a Kerr-cat qubit." Nature 584.7820 (2020): 205-209 (for Kerr cats according to schemes (B) and (C)), and to perform the displacement drives with phase angles equal (or $\pi$ out-of-phase) to this known phase in the same manner as described above. It will be appreciated that the displacement drive comprises driving the resonant portion which hosts the Kerr cat qubit at the frequency of that resonant portion, e.g. as described in Grimm, Alexander, et al. "Stabilization and operation of a Kerr-cat qubit." Nature 584.7820 (2020): 205-209.

**Numerical examples**

Embodiments of the above-described reset protocol of the present invention were simulated using the Dynamics python package, available here: Guilmin, P., Gautier, R., Bocquet, A. & Genois, É. dynamiqs: an open-source Python library for GPU accelerated and differentiable simulation of quantum systems 2024, https://github.com/dynamiqs/dynamiqs. For the simulations, two modes a considered, the memory mode a with annihilation operator $\alpha$ and the buffer mode with annihilation operator b. The evolution of the systems were simulated using the Dynamics function *mesolve,* which solves the Lindblad master equation with a Hamiltonian and a list of jump operators.

In our case, the Hamiltonian corresponds to the relevant pulses in the reset protocol, with a memory drive Hamiltonian $H_a = \epsilon_a a^\dagger + \epsilon_a^* a$ and a stabilization Hamiltonian $H_{stab} = g_2^* a^2 b^\dagger + g_2\left(a^\dagger\right)^2 b + \epsilon_d b^\dagger + \epsilon_d^* a$, wherein $\varepsilon_a$ denotes the memory (Zeno) drive complex amplitude, $\varepsilon_d$ is the buffer drive complex amplitude, and $g_2$ is the two-photon coupling rate. The parameters are chosen so as to stabilize coherent states $|\beta\rangle$ whose amplitude is given by $\beta = \epsilon_d / g_2^*$ and thus configurable in the simulation, and controllable in practice for instance by the amplitude of the buffer drive.

The loss operators are: memory dephasing $\sqrt{2\kappa_\phi}a^\dagger a$, thermal excitation and de-excitation of the memory and the buffer, and single photon decay of the memory and the buffer. For the purposes of the simulations, the Hilbert space of the modes was truncated at $N_a = 60$ for the memory resonator modes and $N_b = 3$ for the buffer resonator modes. The code is parametrized by $\alpha = 2$, with the following parameters set as $g_2 = 6$ MHz, $\kappa_a = 100$ KHz, $\kappa_b = 20$ MHz, and zero thermal population of photons in the memory and buffer.

Figure 13 illustrates the simulated Wigner functions corresponding to the embodiment of Figure 8, wherein the panels, from left to right, show: (i) the steady state of the first stabilization period (here a "+" cat state, namely $|C_\alpha^+\rangle$); (ii) the state after a $2\alpha$ displacement; (iii) the state after the second stabilization period; and (iv) the state after a $-\alpha$ displacement.

Thus, after step (iii) the state confined in the memory resonator is substantially in the coherent state $|\alpha = 2\rangle$, and after step (iv) the state confined in the memory resonator is substantially in the vacuum Fock state $|0\rangle$.

By "substantially" in the coherent state $|\alpha\rangle$ or vacuum Fock state $|0\rangle$, it is meant that the resulting state is prepared to a fidelity of at least 0.9, and preferably at least 0.95, and most preferably above 0.99. As will be appreciated, such a definition is typical within the technical field of manipulating delicate quantum states, as one is inherently manipulating probabilistic states.

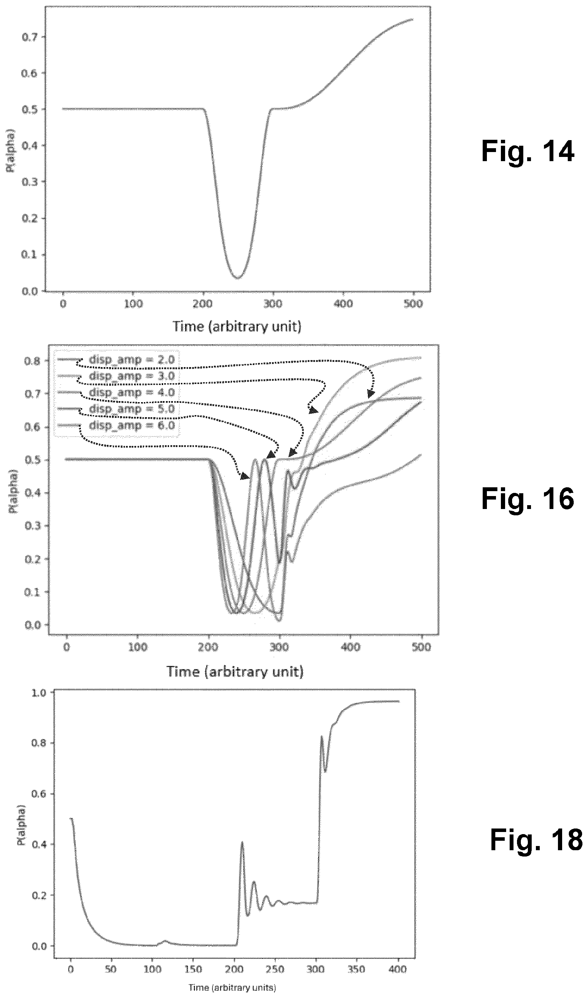

For instance, Figure 14 illustrates the simulated population of the $|+\alpha\rangle$ state during the embodiment of Figure 8 (omitting the optionally second parallel displacement drive) from the initial $|C_\alpha^+\rangle$ state. During the time period from 0 to 200 corresponding to the first stabilization period, the population in $|+\alpha\rangle$ does not change from 0.5 since the confined state is the actively stabilized cat state $|C_\alpha^+\rangle$ which is an equal superposition of $|\pm\alpha\rangle$. During the time period from 200 to 300 corresponding to the first parallel displacement drive (which is the $2\alpha$ displacement $\mathcal{D}_{\beta=2\alpha}$, the population in $|+\alpha\rangle$ initially

evacuates (corresponding the right "blob" of the cat state in Figure 13 shifting away from the $\alpha$ = 2 region in phase space) and subsequently re-populated (corresponding to the left "blob" of the cat state in Figure 13 shifting towards the $\alpha$ = 2 region in phase space)). During the time period from 300 to 500 corresponding to the second stabilization period the majority of the field is caught and stabilized substantially only in the $|+\alpha\rangle$ state, reaching a population in $|+\alpha\rangle$ of at least 0.75.

As an example, the evolution of the population of the $|+\alpha\rangle$ state could be verified in a similar manner experimentally by, e.g., performing a Wigner tomography, or alternatively by displacing by $-\alpha$ and measure the parity or probability to have zero photons.

Figure 15 illustrates the simulated Wigner functions corresponding to the embodiment of Figure 8, for the evolution during the second stabilization period (namely between time period 300 to 500 in Figure 14, wherein the panels, from left to right, show simulated Wigner functions at equally separated time intervals between 300 and 500. In particular, Figure 15 shows that the state may be driven out of the stabilization axis, potentially due to non-adiabatic processes (characterized by the buffer not being in the vacuum state throughout the second stabilization period) triggered by the sudden $\alpha$-stabilization applied to a field centred around $3\alpha$. Thus, the buffer may be in a non-adiabatic regime during the second stabilization, which causes leakage of the memory field from the right part of its phase space to the left part (as schematically shown in Figure 10), preventing the second stabilization from catching the totality of the field in the coherent $|+\alpha\rangle$ state, thereby reducing the fidelity.

For instance, Figure 16 shows simulated populations in the $|+\alpha\rangle$ state for different values of displaced cat size (second stabilization with stepped cat size), indicating that the fidelity achieved is strongly dependent on the number of photons of the field to which the stabilization is applied. Indeed, for $\alpha$ = 3 the fidelity is improved.

Figure 17 illustrates the simulated Wigner functions corresponding to the embodiment of Figure 9, for the evolution during the first two stepped stabilizations of the second stabilization period. The panels, from left to right, show: (i) stabilization for $\beta$ = $3\alpha$ before the system has reached a steady state; (ii) stabilization for $\beta$ = $3\alpha$ after the system has reached a steady state; then (iii)-(v) progressive evolutions of the state during the $\beta$ = $2.3\alpha$ stabilization. As described above, the duration of each of the stepped stabilizations is long enough for the system to reach a steady state. By comparison with the evolutions presented in Figure 15, the evolutions in Figure 17 show that the state may be driven out of the stabilization axis to a lower degree, thereby resulting in a lesser extent of non-adiabatic processes, thereby resulting in a higher fidelity.

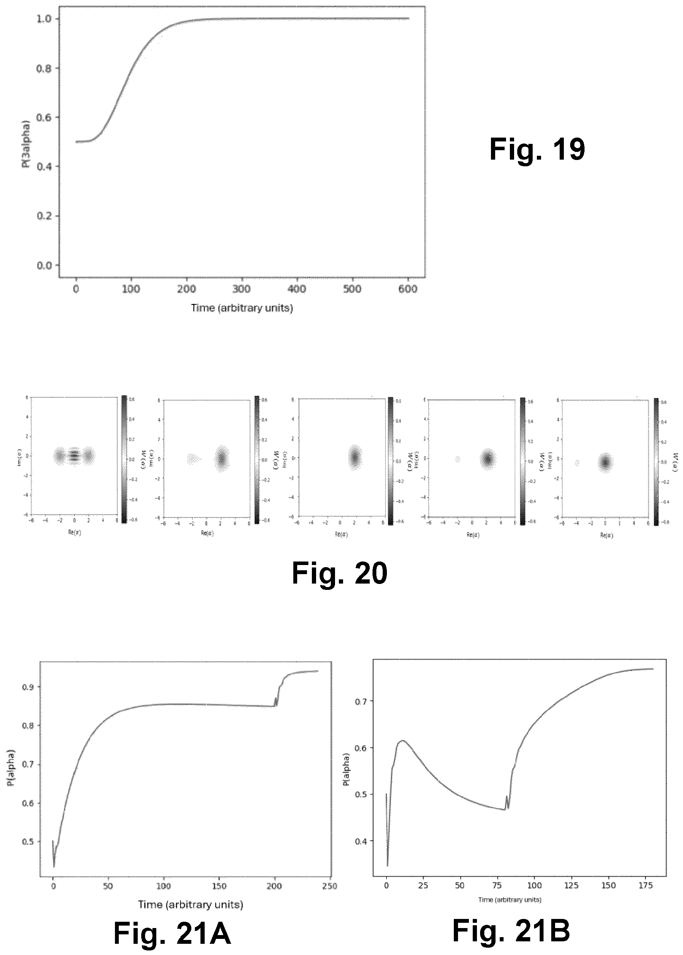

Indeed, Figure 18 illustrates the simulated population of the $|+\alpha\rangle$ state during the embodiment of Figure 9 (omitting the optionally second parallel displacement drive) from the state immediately after the first parallel displacement drive. The four stepped stabilizations have equal lengths of 100 time units. The initial state in Figure 18 is therefore the state immediately after the first parallel displacement drive, namely the state displaced from $|C_\alpha^+\rangle$ and is proportional to $|\alpha + 2\alpha\rangle$ + $|-\alpha + 2\alpha\rangle$ = $|3\alpha\rangle$ + $|\alpha\rangle$ such that the initial population of the $|\alpha\rangle$ is 0.5 as shown at the start of Figure 19. This state is then stabilized in the stepped stabilizations described above in relation to Figure 9, namely stabilized for $\beta$ = $3\alpha$, then $\beta$ = $2.3\alpha$, then $\beta$ = $1.6\alpha$, and then $\beta$ = $\alpha$. As shown in Figure 18, the population in the memory resonator in $|\alpha\rangle$ therefore changes step-by-step, until it reaches very close to 1.

Figure 19 illustrates the simulated population of the $|+3\alpha\rangle$ state during the embodiment of Figure 11 (omitting the optionally second parallel displacement drive) from the state immediately after the first parallel displacement drive. Namely, Figure 19 shows the population in the memory in the $|3\alpha\rangle$ coherent state during the second stabilization period, and leads to a theoretical fidelity of 1.

Figure 20 illustrates the simulated Wigner functions corresponding to the embodiment of Figure 12, wherein the panels, from left to right, show: (i) the steady state of the first stabilization period (here a "+" cat state, namely $|C_\alpha^+\rangle$); (ii) the state after a $2\alpha$ displacement whilst maintaining the stabilization (contrary to the embodiments of Figures 8-11); (iii) the state after the second stabilization period; and (iv) the state after a $-\alpha$ displacement.

As will be appreciated, in the embodiment of Figure 12, the time duration of the first parallel displacement drive should be long enough for the system to reach the corresponding steady state, but it should also be short enough for the reset protocol to be as quick as possible whilst maintaining a satisfactory fidelity. The drive strength of the first parallel displacement drive, denoted $\varepsilon_a$, should be strong enough for the first parallel displacement drive to move the field away from the stabilization steady state (which is get on in this embodiment), but should not be so strong so as to lead to a steady state which is too far from the desired stabilized coherent state.

For instance, Figures 21A and 21B shows simulations of the population of the $|\alpha\rangle$ coherent state in the memory during the embodiment of Figure 12 for the first parallel displacement drive strength $\varepsilon_a$ = 10MHz in Figure 21A (leading to a fidelity of around 0.92) and $\varepsilon_a$ = 15MHz in Figure 21B (leading to a fidelity of around 0.75). As shown, the population starts in 0.5 (given in this example the initial state is the "+" cat state, namely $|C_\alpha^+\rangle$), it then predominantly increases during the first parallel displacement drive whilst stabilization is maintained (from time 0 to 200 in Figure 21 A and 0 to 80 in Figure 21B) until a steady state is reached close to (but not quite) the $|\alpha\rangle$ coherent state, a shown in the middle panel of Figure 20. The second stabilization period (i.e. the maintained stabilization after the first parallel displacement drive has finished) then gathers the field closer in the $|\alpha\rangle$ coherent state (from time 200 to 250 in Figure 21A and 80 to 175 in Figure 21B).

The drive strength of Figure 21A leads to a higher fidelity, whereas the stronger drive strength in Figure 21B leads to a lower fidelity, as the steady state reached by the first parallel displacement drive whilst stabilization is maintained (from time 0 to 80) is far from the targeted $|\alpha\rangle$ coherent state, given that the population in $|\alpha\rangle$ falls even below 0.5 at time 80. However, the protocol of Figure 21B is faster than Figure 21A, and therefore, in some scenarios, the lower fidelity may be acceptable in payment for the shorter total protocol duration.

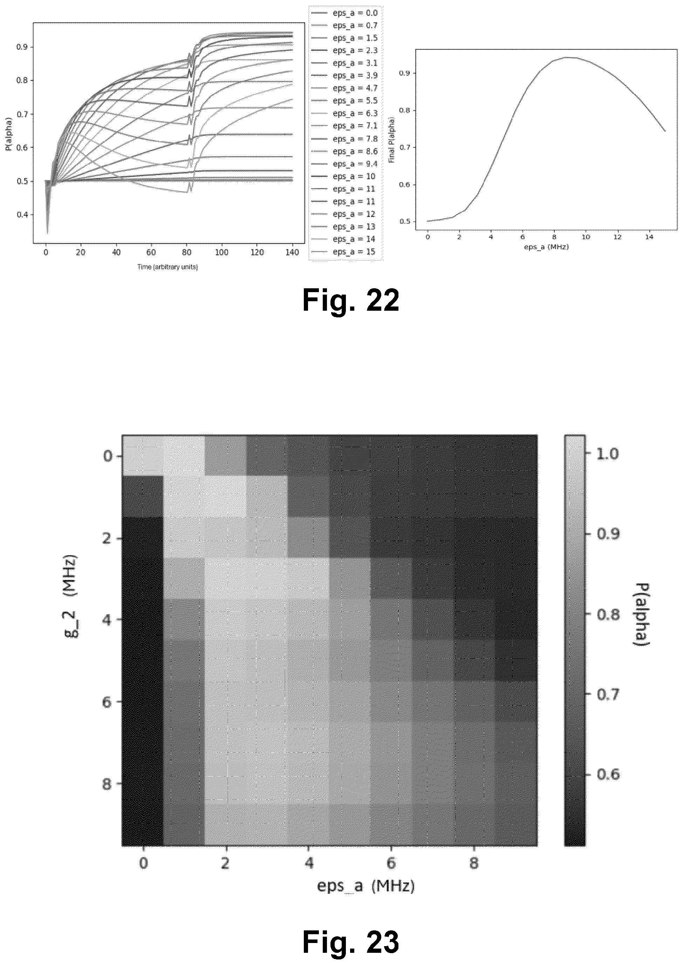

An optimal first parallel displacement drive strength $\varepsilon_a$ may be found any number of ways, for instance one could implement a calibration procedure comprising of: (i) implementing the reset method via a first given drive strength $\epsilon_a^{(1)}$; (ii) measure the fidelity (e.g. by measuring the population in the $|\alpha\rangle$ after the second stabilization period, although any number of different fidelity measurements could be used); (iii) repeating operations (i) and (ii) a plurality of times $n$, with a different drive strength $\epsilon_a^{(2,...,n)}$ each time ("sweeping" $\varepsilon_a$); and (iv) determining the optimal value for the drive strength $\varepsilon_a$ from the results of operation (iii) (e.g. by selecting the drive strength $\varepsilon_a$ which resulted in the best measured fidelity, or interpolating therefrom). Such a protocol is shown in the simulations of Figure 22, wherein the left panel shows the populations in $|\alpha\rangle$ after the embodiment of Figure 12 is performed for a range of different drive strengths $\varepsilon_a$ and the right panel shows a corresponding fit of the final population in $|\alpha\rangle$ as a function of the drive strength $\varepsilon_a$, enabling an optimal $\varepsilon_a$ to be selected (somewhere between $\varepsilon_a = 9$ and $\varepsilon_a = 10$).

Moreover, for a given duration of the first parallel displacement drive, the optimal drive strength $\varepsilon_a$ will also depend on the cat stabilization strength characterised by the parameter $g_2$ described above. Thus, both $\varepsilon_a$ and $g_2$ may be swept, and the fidelity measured at each point of the two-dimensional sweep. A simulation of such is shown in Figure 23. Thus, in embodiments it may be advantageous to simultaneously reduce $g_2$ whilst applying the first parallel displacement drive in the embodiment of Figure 12, as lower values of $g_2$ may lead to better fidelities (although it is noted that good fidelities can be reached at relatively higher values of $g_2$).

Although Figures 22 and 23 refer to optimisation methods for the embodiment of Figure 12, such sweeps of operational physical parameters can similarly be applied to the embodiments of Figures 8-11.

It is noted that similar optimisation protocols may be analogously applied for determining the optimal parameters (such as drive strength) for the optional second parallel displacement drive, which displaces the state in the memory to result in the vacuum Fock state $|0\rangle$.

As will be appreciated, in the above the physical units have sometimes been omitted in the simulations for computational convenience, however they would be simply incorporated when comparing the simulations to a physically performed protocol, as discussed below.

**Experimental results**

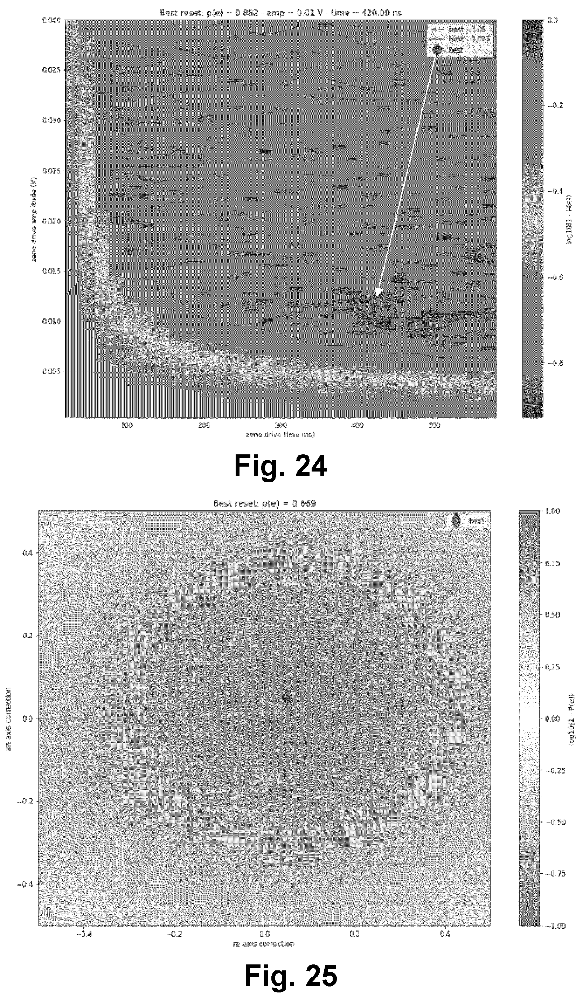

In Figure 24, the protocol of Figure 12 is applied while the displacement drive length and strength are swept. It shows the probability to have the vacuum state at the end of the protocol in arbitrary unit. The grayscale map used is based on a log scale. This measurement allows to calibrate the duration and strength of the displacement drive.

Figure 25 shows the optimization of the counter displacement at the end of the protocol described in Figure 12. In theory the displacement should be equal to $-\alpha$ but in practice we might have to correct for imperfection, leading to a displacement amplitude close from $-\alpha$. The Figure shows the probability to have the vacuum state at the end the reset protocol has a function of the real (x axis) and imaginary (y axis) correction applied to the displacement $-\alpha$. A correction x,y is thus derived corresponding to a displacement $-\alpha * (1 + x + iy)$. This opimazation step can be done for every protocol defined in the Figures 8 to 12.

**Claims**

1.  A method for resetting an arbitrary state, hosted in a quantum system, to the vacuum Fock state or a coherent state, wherein the quantum system comprises: (I) at least one resonant portion configured to have a first mode having a first resonant frequency and wherein the arbitrary state is hosted in the first mode, (II) a non-linear element coupled to the at least one resonant portion so as to non-linearly couple to the first mode, and (III) one or more signal generator(s) coupled to the at least one resonant portion and/or to the non-linear element and configured to input control signals to physically stabilize a cat qubit subspace in the first mode having a cat phase angle;
    the method comprising:

    (i) physically stabilizing for a first period of time, with the one or more signal generator(s), a first cat qubit subspace having a first cat phase angle and first cat size $|\alpha|^2$, wherein $\alpha$ is a first amplitude which is the amplitude of the superposed coherent states $|\pm\alpha\rangle$ defining the first cat qubit subspace;

(ii) after the first period of time, physically performing for a second period of time, with the one or more signal generator(s), a first parallel displacement drive by inputting electromagnetic radiation having a first phase substantially equal with the first cat phase angle, a frequency substantially equal to the first resonant frequency, and a first displacement amplitude greater than or equal to the first amplitude;

(iii) after the second period of time, physically stabilizing for a third period of time, with the one or more signal generator(s), a second cat qubit subspace having a second cat phase angle which is substantially equal to the first cat phase angle and second cat size $|\beta|^2$, wherein $\beta$ is a second amplitude which is the amplitude of the superposed coherent states $|\pm\beta\rangle$ defining the first cat qubit subspace, such that a coherent state $|\beta\rangle$ with the second amplitude $\beta$ is stabilized in the first mode.

2. The method of claim 1, wherein in operation (ii) the first parallel displacement drive has a first displacement amplitude greater than or equal to twice the first amplitude

3. The method claims 1 or 2, further comprising:

(iv) after the third period of time, physically performing, with the one or more signal generator(s), a second parallel displacement drive by inputting electromagnetic radiation having a second phase substantially $\pi$ out-of-phase with the second cat phase angle and a frequency substantially equal to the first resonant frequency, wherein the second parallel displacement drive is performed for a fourth period of time to substantially evacuate the population hosted in the first mode to the vacuum Fock state.

4. The method of any preceding claim, wherein the quantum system is configured to physically stabilize a cat qubit subspace by dissipative stabilization.

5. The method of claim 4, wherein the quantum system is configured to physically stabilize a cat qubit subspace by parametric dissipative stabilization or resonant dissipative stabilization.

6. The method of any of claims 1-3, wherein the quantum system is configured to physically stabilize a cat qubit subspace by Kerr Hamiltonian stabilization.

7. The method of any preceding claim, wherein, prior to operation (ii), the stabilization of the first cat qubit subspace is terminated, such that no cat qubit subspace is physically stabilized during the first parallel displacement drive of operation (ii).

8. The method of any preceding claim, wherein, during operation (ii), the stabilization of the first cat qubit subspace is continuously maintained, such that the first cat qubit subspace is physically stabilized during the first parallel displacement drive of operation (ii).

9. The method of any preceding claim, wherein the second cat qubit subspace stabilized in operation (iii) has a second cat size $|\beta|^2$ which is larger than the first cat size $|\alpha|^2$ of the first cat qubit subspace stabilized in operation (i).

10. The method of any preceding claim, wherein the second cat qubit subspace stabilized in operation (iii) has a second cat size $|\beta|^2$ which is substantially equal to the first cat size $|\alpha|^2$ of the first cat qubit.

11. The method of any preceding claim, wherein operation (iii) comprises physically stabilizing for sequential discrete periods of time during the third period of time, a series of discrete stepped stabilizations respectively resulting in stabilizing a plurality of cat qubit subspaces, wherein successive ones of said plurality of cat qubit subspaces have decreasing cat sizes.

12. The method of any preceding claim, wherein operation (iii) comprises physically stabilizing during the third period of time, the second cat qubit subspace with a continuously decreasing cat size.

13. A quantum processor comprising:

a quantum system which comprises:

(I) at least one resonant portion configured to have a first mode having a first resonant frequency and wherein an arbitrary state is hosted in the first mode,
(II) a non-linear element coupled to the at least one resonant portion so as to non-linearly couple to the first mode, and
(III) one or more signal generator(s) coupled to the at least one resonant portion and/or to the non-linear element and configured to input control signals; and

a command circuit configured to control the one or more signal generator(s) so as to physically stabilize a cat qubit subspace in the first mode having a cat phase angle;
wherein the command circuit is configured to perform method according to any preceding claim.

14. A computer program product comprising instructions to cause the quantum processor of claim 13 to perform the method of claims 1-12.

15. A computer-readable medium having stored thereon the computer program product of claim 14.

**Fig. 1**

**Fig. 2**

**Fig. 3**

**Fig. 4**

**Fig. 5**

Stabilize 1st cat qubit
subspace having 1st cat
phase angle and first cat
size $|\alpha|^2$
**702**

Perform 1st parallel
displacement drive having
phase equal to 1st cat
phase angle & displacement
amplitude $\geq \alpha$
**704**

Stabilize 2nd cat qubit
subspace having 2nd cat
phase angle equal to 1st
cat, and 2nd cat size $|\beta|^2$ to
stabilize coherent state $|\beta\rangle$
**706**

**Fig. 6**

**Fig. 7**

Signal(s) to NLE 7
(2-to-1 photon exchange)

Buffer

Memory

Stabilization

Displacement
to the right of
the phase
space
$D(\beta \geq 2\alpha)$

Stabilization

Displacement
from $|\alpha\rangle$ to $|0\rangle$

**Fig. 8**

Fig. 9

Fig. 10

Fig. 11

Catching the
state in the
code space

From steady state
of Zeno step to
coherent state

Signal(s) to NLE 7
(2-to-1 photon exchange)

Buffer

Stabilization

Memory

"Zeno step":
displacement
to the right of
the phase
space

Displacement
from |α⟩ to |0⟩

**Fig. 12**

**Fig. 13**

**Fig. 15**

**Fig. 17**

Fig. 14

Fig. 16

Fig. 18

**Fig. 19**

**Fig. 20**

**Fig. 21A**

**Fig. 21B**

Fig. 22

Fig. 23

Best reset: p(e) = 0.882 - amp = 0.01 V - time = 420.00 ns

## Fig. 24

Best reset: p(e) = 0.869

## Fig. 25

**EUROPEAN SEARCH REPORT**

Application Number

EP 24 30 7289

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | ANTOINE MARQUET ET AL: "Autoparametric resonance extending the bit-flip time of a cat qubit up to 0.3 s", ARXIV.ORG, CORNELL UNIVERSITY LIBRARY, 201 OLIN LIBRARY CORNELL UNIVERSITY ITHACA, NY 14853, 13 July 2023 (2023-07-13), XP091562115, * abstract; page 1 - page 24; figures 1,4,11 * | 1-15 | INV. G06N10/40 G06N10/70 |
| A,D | ULYSSE R\'EGLADE ET AL: "Quantum control of a cat-qubit with bit-flip times exceeding ten seconds", ARXIV.ORG, CORNELL UNIVERSITY LIBRARY, 201 OLIN LIBRARY CORNELL UNIVERSITY ITHACA, NY 14853, 13 July 2023 (2023-07-13), XP091562280, * abstract; page 1 - page 6; S1-S6; figures 1, 2, S2 * | 1-15 | |
|  |  |  | TECHNICAL FIELDS SEARCHED (IPC) |
|  |  |  | G06N |

The present search report has been drawn up for all claims

| Place of search | Date of completion of the search | Examiner |
|---|---|---|
| The Hague | 5 June 2025 | Klasen, TJ |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 764 976 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 23175147
- EP 23306839
- EP 21306965
- EP 22306815
- EP 22306816

### Non-patent literature cited in the description

- **LESCANNE, RAPHAËL et al.** Exponential suppression of bit-flips in a qubit encoded in an oscillator. *Nature Physics*, 2020, vol. 16.5, 509-513
- **BERDOU, CAMILLE et al.** One hundred second bit-flip time in a two-photon dissipative oscillator. *PRX Quantum*, 2023, vol. 4.2, 020350
- **RÉGLADE, U.** ; **BOCQUET, A.** ; **GAUTIER, R.** ; **COHEN, J.** ; **MARQUET, A.** ; **ALBERTINALE, E.** ; **PANKRATOVA, N.** ; **HALLÉN, M.** ; **RAUTSCHKE, F.** ; **SELLEM, L.A.** Quantum control of a cat qubit with bit-flip times exceeding ten seconds.. *Nature*, 2024, 1-6
- **P. ARRANGOIZ-ARRIOLA** ; **E. A. WOLLACK** ; **Z. WANG** ; **M. PECHAL** ; **W. JIANG** ; **T. P. MCKENNA** ; **J. D. WITMER** ; **R. VAN LAER** ; **A. H. SAFAVI-NAEINI**. Resolving the energy levels of a nanomechanical oscillator. *Nature*, 2019, vol. 571, 537
- **KOUNALAKIS, MARIOS** ; **GERRIT EW BAUER** ; **YAROSLAV M. BLANTER**. Analog quantum control of magnonic cat states on a chip by a superconducting qubit.. *Physical review letters*, 2022, vol. 129.3, 037205
- **KOZIN, VALERII K. et al.** Quantum phase transitions and cat states in cavity-coupled quantum dots. *Physical review research*, 2024, vol. 6.3, 033188
- **RÉGLADE, ULYSSE et al.** Quantum control of a cat qubit with bit-flip times exceeding ten seconds.. *Nature*, 2024, 1-6
- **GUILLAUD, JÉRÉMIE** ; **MAZYAR MIRRAHIMI**. Repetition cat qubits for fault-tolerant quantum computation. *Physical Review X*, 2019, vol. 9.4, 041053
- **RÉGLADE, ULYSSE et al.** Quantum control of a cat qubit with bit-flip times exceeding ten seconds. *Nature*, 2024, 1-6
- **MARQUET, ANTOINE et al.** Autoparametric resonance extending the bit-flip time of a cat qubit up to 0.3 s. *Physical Review X*, 2024, vol. 14.2, 021019
- **GRIMM, ALEXANDER et al.** Stabilization and operation of a Kerr-cat qubit. *Nature*, 2020, vol. 584 (7820), 205-209
- **GUILMIN, P.** ; **GAUTIER, R.** ; **BOCQUET, A.** ; **GENOIS, É.** *dynamiqs: an open-source Python library for GPU accelerated and differentiable simulation of quantum systems*, 2024, https://github.com/-dynamiqs/ dynamiqs